# EUROPÄISCHE PATENTSCHRIFT

(11) **EP 0 534 903 B1**
(45) Veröffentlichungstag und Bekanntmachung des Hinweises auf die Patenterteilung: **25.06.1997**
(21) Anmeldenummer: 92810717.6
(22) Anmeldetag: 17.09.1992
(51) Int. Cl.: D21H 21/28

(54) **Verfahren zum Färben von Papier mit Disazofarbstoffen**
Process for dyeing of paper with diazo dyes
Procédé pour colorer le papier avec des colorants diazo

(30) Priorität: 26.09.1991 CH 2852/91
(43) Veröffentlichungstag der Anmeldung: 31.03.1993
(73) Patentinhaber: Ciba Specialty Chemicals Holding Inc., 4057 Basel (CH)
(72) Erfinder: Käser, Adolf, Dr., CH-4103 Bottmingen (CH)

(56) Entgegenhaltungen:
- EP-A- 0 354 872
- DE-A- 3 223 257
- US-A- 2 993 083

## Beschreibung

Zum Färben von Papier in blauen Farbtönen werden vielfach Disazofarbstoffe verwendet. Falls hohe Lichtechtheiten der Färbungen erwünscht sind, werden in der Praxis fast ausschliesslich Kupferkomplexe von Farbstoffen eingesetzt. Neuerdings sind aus ökonomischen und ökologischen Gründen lichtechte blaue Papierfarbstoffe gesucht, welche keine Kupferkomplexe enthalten. Insbesondere für grünstichig blaue Farbtöne sind solche Farbstoffe jedoch kaum bekannt.

Der vorliegenden Erfindung lag die Aufgabe zugrunde, ein Verfahren zum Färben von Papier in blauen Farbtönen mit guter Lichtechtheit ohne die Verwendung von Kupferverbindungen zur Verfügung zu stellen. Diese Aufgabe wird durch das erfindungsgemässe Verfahren gelöst.

Gegenstand der Erfindung ist ein Verfahren zum Färben von Papier, das dadurch gekennzeichnet ist, dass man einen Farbstoff der Formel 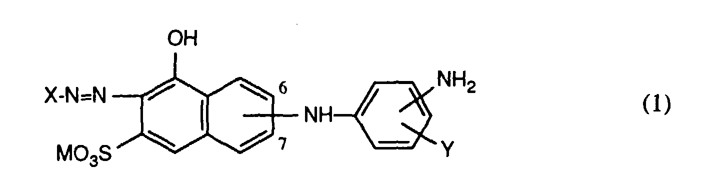 verwendet, worin
Y Sulfo oder Carboxy und
X eine Gruppe der Formel 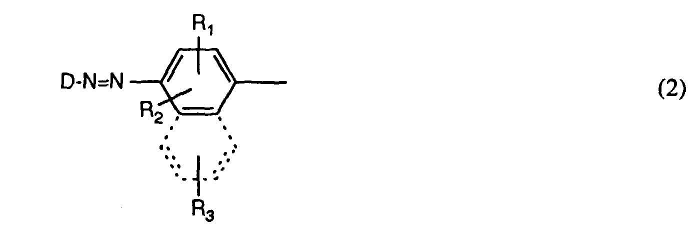
oder

KK-N=N-B- (3)

bedeutet, wobei
D den Rest einer aromatischen, carbocyclischen oder heterocyclischen Diazokomponente,
KK eine Kupplungskomponente,
B den Rest eines aromatischen Diamins,
R₁ Wasserstoff, C₁-C₄-Alkyl oder -Alkoxy, -NH-CO-C₁-C₄-Alkyl oder -NH-CO-NH₂,
R₂ Wasserstoff, C₁-C₄-Alkyl oder -Alkoxy, Sulfo oder Carboxy,
R₃ Wasserstoff, C₁-C₄-Alkyl, Sulfo oder Carboxy und
M Wasserstoff oder ein Aequivalent eines farblosen Kations bedeutet, wobei Y und die freie Aminogruppe am Phenylaminorest in der Formel (1) o-ständig zueinander stehen, wobei der Phenylaminorest in 6- oder 7-Stellung gebunden ist und wobei D nicht der Rest von 4-Nitro-4'-aminostilben-2,2'-disulfonsäure oder 4,4'-Diaminostilben-2,2'-disulfonsäure ist.

Bevorzugt werden solche Farbstoffe der Formel (1) verwendet, worin Y Sulfo bedeutet und die freie Aminogruppe in p-Stellung zur -NH-Gruppe steht.

Die Diazokomponente D stellt vorzugsweise einen Phenyl- oder Naphthalinrest dar, welcher gegebenenfalls ein- oder mehrmals durch in der Farbstoffchemie übliche Reste substituiert ist, z.B. durch Sulfo, Carboxy, Halogen, Hydroxy, Nitro, Cyan, Alkyl, Alkoxy, Alkylcarbonylamino, Phenylamino, Arylazo, vor allem Phenylazo, Phenylsulfonyl, Phenylcarbonylamino oder Styryl, wobei die Phenylgruppen in den Substituenten ihrerseits durch die genannten Substituenten substituiert sein können.

Vorzugsweise stellt D einen Phenylrest dar, der unsubstituiert oder durch Sulfo, Carboxy, Chlor, Cyan, Hydroxy, Nitro, C₁-C₄-Alkyl oder -Alkoxy, Phenylamino, Phenylsulfonyl, Phenylazo, Phenylcarbonylamino oder Styryl substituiert ist oder einen Naphthylrest, der unsubstituiert oder durch Sulfo, Hydroxy oder Arylazo, vor allem Phenylazo, substituiert ist, wobei die Phenylgruppen in den Substituenten unsubstituiert oder durch Sulfo substituiert sind.

R₁ bedeuet vorzugsweise Wasserstoff, Methyl, Methoxy oder Acetylamino, R₂ bedeutet vorzugsweise Methyl oder vor allem Wasserstoff und R₃ bedeutet vorzugsweise Sulfo oder vor allem Wasserstoff.

Unter den Resten der Formel (2) sind Reste der Formel 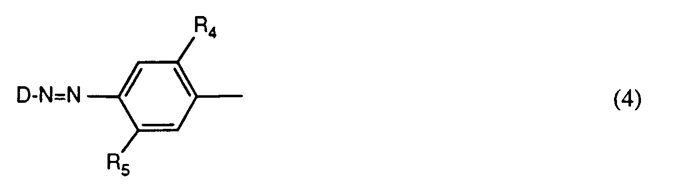 oder 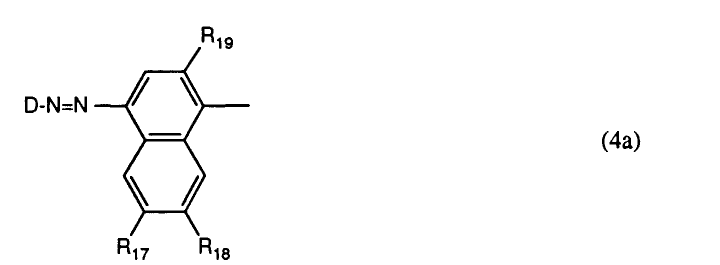 besonders bevorzugt,
worin D einen Phenylrest darstellt, der durch Sulfo, Carboxy, Chlor, Cyan, Hydroxy, Nitro, C₁ -C₄-Alkyl oder -Alkoxy, Phenylamino, Phenylsulfonyl, Phenylazo, Phenylcarbonylamino oder Styryl substituiert ist, oder einen Naphthylrest, der durch Sulfo, Hydroxy oder Phenylazo substituiert ist, wobei die Phenylgruppen in den Substituenten unsubstituiert oder durch Sulfo substituiert sind,
R₄ Wasserstoff, Methyl oder Methoxy,
R₅ Wasserstoff, Methyl, Methoxy oder Acetylamino,
R₁₇ und R₁₈ unabhängig voneinander je Wasserstoff oder Sulfo und
R₁₉ Wasserstoff, Methoxy oder Carboxymethoxy bedeutet.

Im Rest der Formel (3) bedeutet KK eine Kupplungskomponente, z.B. ein Naphthol, Naphthylamin oder Diphenylamin, welche substituiert sein können, z.B. durch Sulfo, Hydroxy, Amino, Acylamino, Alkoxy, Halogen, Phenylamino oder Phenylcarbonylamino, wobei die Phenylgruppen ihrerseits substituiert sein können, z.B. durch Sulfo oder Amino.

Bevorzugte Kupplungskomponenten sind solche der Formeln 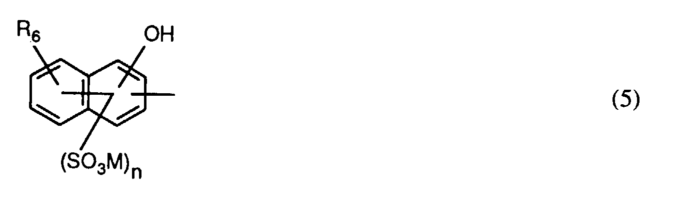 oder 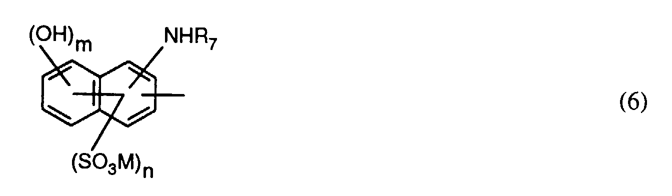 worin
R₆ Wasserstoff, Hydroxy, Alkoxy, Amino, Alkanoylamino, Phenylcarbonylamino oder Phenylamino bedeutet, wobei die Phenylgruppen durch Sulfo, Amino oder Alkanoylamino substituiert sein können,
n 1 oder 2,
R₇ Wasserstoff oder Phenylamino,
M Wasserstoff oder ein Aequivalent eines farblosen Kations und
m 0 oder 1 bedeutet.

B stellt den Rest eines aromatischen Diamins dar, beispielsweise eines Phenylendiamins der Formel 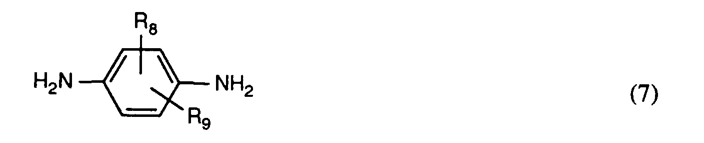 oder eines Diamins der Formel 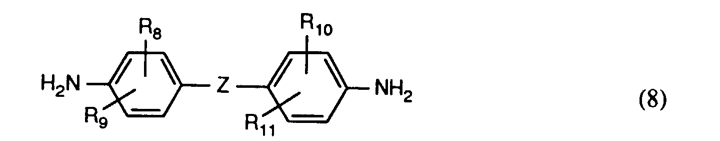 worin R₈, R₉, R₁₀ und R₁₁ unabhängig voneinander je Wasserstoff, C₁-C₄-Alkyl oder -Alkoxy, Sulfo oder Carboxy und
Z die direkte Bindung oder ein in der Chemie der Direktfarbstoffe übliches Brückenglied bedeuten.

Geeignete Brückenglieder Z sind z.B:
-CH=CH-, -N=N-, 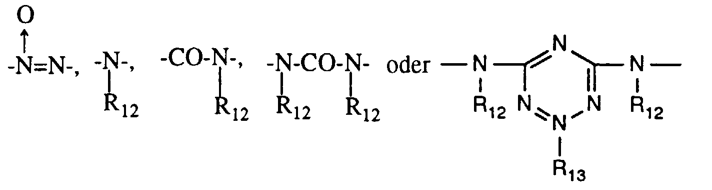 worin R₁₂ unabhängig voneinander je Wasserstoff oder Alkyl und
R₁₃ Chlor, Alkoxy oder 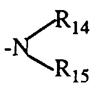 bedeutet, wobei R₁₄ und R₁₅ unabhängig voneinander je Wasserstoff, gegebenenfalls substituiertes C₁-C₆-Alkyl oder gegebenenfalls substituiertes Phenyl bedeuten.

Bevorzugte Brückenglieder Z sind -N=N-, 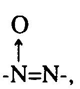 -CH=CH-, -NH-, -CO-NH-, -NH-CO-NH- oder 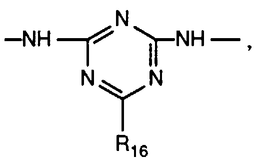 worin R₁₆ 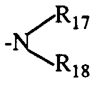 und R₁₇ und R₁₈ unabhängig voneinander je gegebenenfalls substituiertes C₁-C₄-Alkyl bedeuten. Unter diesen sind -CH=CH- und 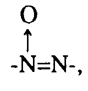 besonders bevorzugt.

M bedeutet Wasserstoff oder ein Aequivalent eines farblosen Kations, beispielsweise Lithium, Natrium, Kalium, Ammonium oder die protonierte Form eines C₄-C₁₂-Trialkylamins, C₄-C₁₂-Diamins oder C₂-C₁₅-Alkanolamins.

Bei M in der Bedeutung eines protonierten C₄-C₁₂-Triakylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin butylamin, Tri-isobutylamin und insbesondere um Triethylamin oder Tri-isopropylamin handeln; geeignet sind auch Gemische verschiedener protonierter Amine.

Hat M die Bedeutung protoniertes C₄-C₁₂-Diamin, handelt es sich z.B. um ein Ethylendiamin oder 1,3-Diaminopropan, bei dem eines oder beide N-Atome zusätzlich mit einem oder zwei C₁-C₄-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes C₂-C₁₅-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroyethyl)-diethylamin, N,N-Di(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin. Es kommen auch protonierte Polyglykolamine in Frage, z.B. Diethanolamin-tris-glykolether.

Vorzugsweise hat M die Bedeutung Na^{⊕}, Li^{⊕} oder protoniertes C₄-C₆-Alkanolamin, wobei bei den C₄-C₆-Alkanolaminen Tri-(2-hydroxyethyl)-amin, Di-(2-hydroxyethyl)-amin oder ein Gemisch dieser beiden Amine bevorzugt ist.

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis 8 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Sulfo, Carboxy, C₁-C₄-Alkoxy, durch Hydroxyl substituiertes C₁-C₄-Alkoxy, Phenyl, Phenoxy oder Phenylaminocarbonyl, wobei die Phenylgruppe in den drei letztgenannten Resten z.B. durch Sulfo, C₁-C₄-Alkyl, C₁-C₄-Alkoxy oder Phenoxy substituiert sein kann. Geeignete Reste dieser Art sind z. B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3,1-Methyl-2-phenoxyethyl oder 1-Methyl-2-phenylaminocarbonyl-ethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substutiert sein, z.B. durch die als Substituenten der Alkylgruppen aufgeführten Reste.

Unter Halogen ist Fluor, Brom Jod oder vor allem Chlor zu verstehen.

Unter Phenylresten sind in dieser Anmeldung generell unsubstituierte oder substituierte Phenylreste zu verstehen. Als Substituenten kommen z.B. C₁-C₄-Alkyl, C₁-C₄-Alkoxy, Brom, Chlor, Nitro, Cyan, Sulfo, Carboxy oder C₁-C₄-Alkylcarbonylamino in Betracht.

Eine besonders bevorzugte Ausführungsform des erfindungsgemässen Verfahrens besteht darin, dass man einen Farbstoff der Formel 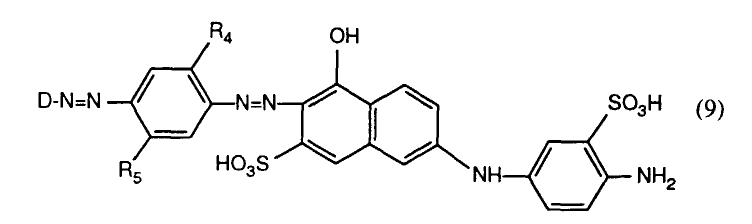 verwendet, worin D einen Phenylrest darstellt, der durch Sulfo, Carboxy, Chlor, Cyan, Hydroxy, Nitro, C₁-C₄-Alkyl oder -Alkoxy, Phenylamino, Phenylsulfonyl, Phenylazo, Phenylcarbonylamino oder Styryl substituiert ist oder einen Naphthylrest, der durch Sulfo, Hydroxy oder Phenylazo substituiert ist, wobei die Phenylgruppen in den Substituenten unsubstituiert oder durch Sulfo substituiert sind, und
R₄ Wasserstoff, Methyl oder Methoxy und
R₅ Wasserstoff, Methyl, Methoxy oder Acetylamino bedeutet.

Sulfophenylrest darstellt, der gegebenenfalls noch durch Chlor, Nitro, Methyl, Methoxy oder Carboxy substituiert ist.

Eine weitere bevorzugte Ausführungsform des erfindungsgemässen Färbeverfahrens besteht darin, dass man einen Farbstoff der Formel 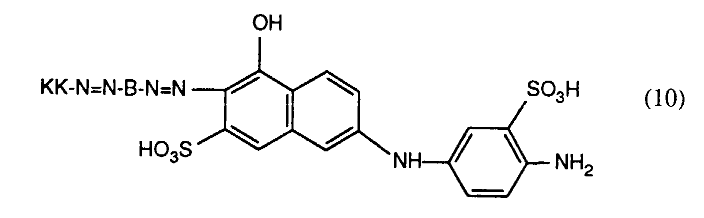 verwendet, worin
KK eine Kupplungskomponente der Formel 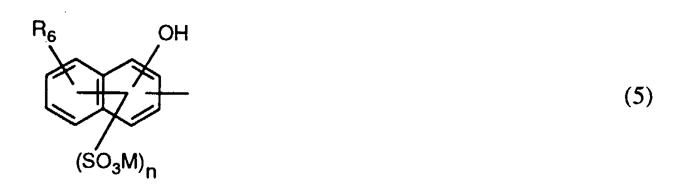 oder 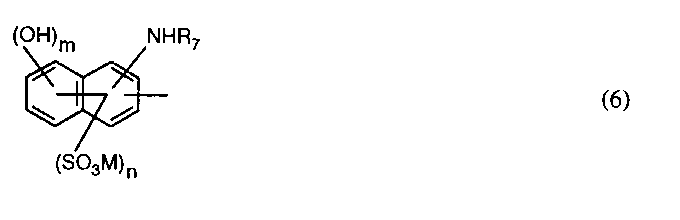 ist, wobei
R₆ Wasserstoff, Hydroxy, Alkoxy, Amino, Alkanoylamino, Phenylcarbonylamino oder Phenylamino bedeutet, wobei die Phenylgruppen durch Sulfo, Amino oder Alkanoylamino substituiert sein können,
n 1 oder 2,
R₇ Wasserstoff oder Phenylamino,
M Wasserstoff oder ein Aequivalent eines farblosen Kations und
m 0 oder 1 und B den Rest eines Phenylendiamins der Formel 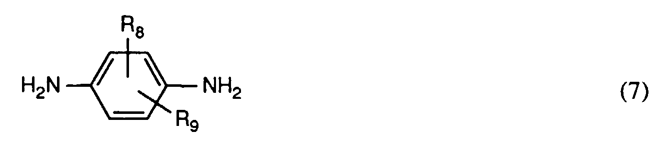
oder eines Diamins der Formel 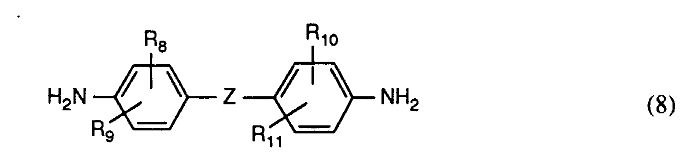 darstellt, worin R₈, R₉, R₁₀ und R₁₁ unabhängig voneinander je Wasserstoff, C₁-C₄-Alkyl oder -Alkoxy,Sulfo oder Carboxy und Z ein Brückenglied der Formel -N=N-, 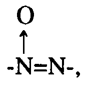 -CH=CH-, -NH-, -CO-NH-, -NH-CO-NH- oder 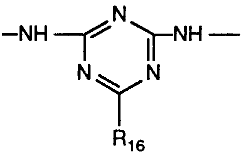 ist, worin R₁₆ 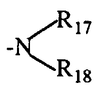 und R₁₇ und R₁₈ unabhängig voneinander je gegebenenfalls substituiertes C₁-C₄-Alkyl bedeuten.

Die im erfindungsgemässen Verfahren zum Färben von Papier verwendeten Farbstoffe sind bekannt oder können auf an sich bekannte Art und Weise hergestellt werden, beispielsweise indem man ein Amin der Formel 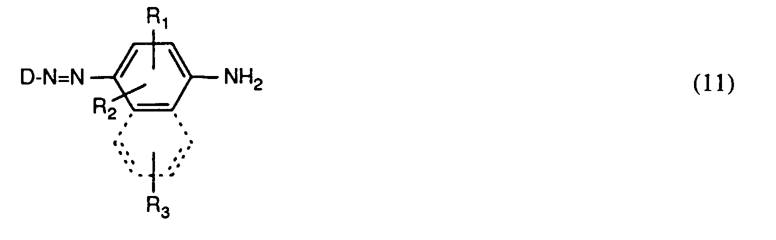 diazotiert und mit einer Kupplungskomponente der Formel 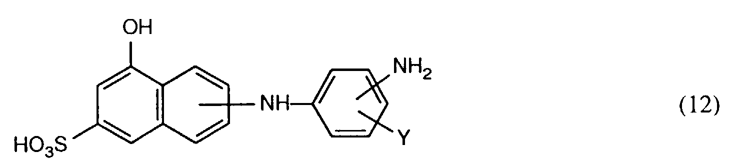 kuppelt, wobei D, R₁, R₂, R₃ und Y die unter den Formeln (1) und (2) angegebenen Bedeutungen aufweisen.

Eine weitere Möglichkeit zur Herstellung von im erfindungsgemässen Verfahren verwendeten Farbstoffen besteht darin, dass man ein Diamin der Formel

H₂N-B-NH₂ (13)

diazotiert, mit einer Kupplungskomponente KK kuppelt, anschliessend den erhaltenen Aminoazofarbstoff erneut diazotiert und mit einer Kupplungskomponente der Formel (12) kuppelt. B und KK weisen die unter der Formel (3) angegebenen Bedeutungen auf.

Man kann auch die Reihenfolge der Kupplungen umkehren und zuerst mit einer Kupplungskomponente der Formel (12) und danach mit einer Kupplungskomponente KK kuppeln. Je nach Art des Diamins der Formel (13) kann es vorteilhaft sein, vor der Diazotierung eine der beiden NH₂-Gruppen zu acylieren oder von einer Nitroaminoverbindung auszugehen und die Nitrogruppe erst nach der ersten Kupplung zur Aminogruppe zu reduzieren.

Die Farbstoffe der Formel (1) können in fester oder tlüssiger Form zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer oder an irgendeinem anderen geeigneten Punkt der Papierherstellung zuzugeben.

Ein weiterer Gegenstand der Erfindung ist daher die Verwendung von konzentrierten wässrigen Lösungen von Farbstoffen der Formel (1), die mindestens 10, beispielsweise 10 bis 30 Gewichtsprozent Farbstoff, bezogen auf das Gesamtgewicht der Lösung, enthalten, zum Färhen von Papier.

Vorzugsweise enthalten die Lösungen 10 bis 20 Gewichtsprozent Farbstoff.

Konzentrierte wässrige Lösungen von Farbstoffen der Formel (1) können z.B. hergestellt werden, indem man die bei der Herstellung des Farbstoffes anfallende Farbstoffsuspension filtriert, gegebenenfalls entsalzt, z.B. durch ein Membrantrennverfahren, und durch Zusatz von Hilfsmitteln, wie Harnstoff, ε-Caprolactam oder Polyethylenglykol stabilisiert. Man kann aber auch den isolierten Farbstoff in Salzsäure anschlämmen, erneut filtrieren und den Filterkuchen mit Lithiumhydroxid oder einem geeigneten Amin, z.B. einem Alkanolamin und der nötigen Menge Wasser vermischen. Schliesslich kann man auch die Kupplung in Gegenwart von LiOH, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff in Form der freien Säure 400 bis 900 Teile Wasser, 0 bis 200 Teile weiterer Zusätze wie Harnstoff, ε-Caprolactam oder Polyethylenglykol sowie soviel Base, dass der pH-Wert zwischen 7 und 10 liegt. Als Base kommen z.B. NaOH, LiOH, Ammoniak oder organische Amine, z.B. Alkanolamine in Betracht.

Die erfindungsgemäss verwendeten wässrigen Konzentrate, die bei Lagerungstemperaturen bis zu -5°C stabil sind, eignen sich zum Färben von Papier, auf welchem sie mit oder ohne Verwendung einer Schlichte attraktive blaue Farbtöne ergeben.

Farbstoffe der Formel (1) sind zum Teil bereits bekannt, jedoch wurde deren Verwendung zum Färhen von Papier nicht in Betracht gezogen. Gegenüber den bekannten blauen kupferfreien Papierfarbstoffen auf der Basis von 1-Hydroxy-7-anilino-naphthalin-3sulfonsäure zeichnen sich die erfindungsgemäss verwendeten Farbstoffe der Formel (1) dadurch aus, dass sie auf Papier Färbungen mit besserer Lichtechtheit ergeben. Die DE-A-32 23 257 und die US-A-2,993,083 beschreiben die Verwendung von unter die Formel (1) fallenden Verbindungen als Zwischenprodukte für die Herstellung von Reaktivfarbstoffen. Die EP-A-0 354 872 beschreibt Trisazofarbstoffe zum Färben von Papier, die jedoch keine Amino- und Sulfooder Carboxygruppe am Anilinosubstituent der 1-Hydroxynaphthalin-3-sulfosäure aufweisen.

Die Farbstoffe können nach allen in der Papicrindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -Sulfat-Zellstoff.

In den nachfolgenden Beispielen bedeuten die Teile Gewichtsteile, und die Temperaturen sind in Celsiusgraden angegeben.

Beispiel 1: 36,6 Teile des durch schwach saure Kupplung von diazotierter 2-Amino-5-nitrobenzolsulfonsäure mit 2-Methoxy-5-methylanilin hergestellten Aminoazofarbstoffes werden in 500 Teilen Wasser mit Natronlauge bei pH 7 zusammen mit einem Dispergator bei 45° zu einer homogenen Suspension vermischt. Man versetzt diese Suspension mit 6,9 Teilen Natriumnitrit und lässt sie in eine Vorlage aus 25 Teilen Salzsäure (32 %ig) und 50 Teilen Eiswasser fliessen. Die Temperatur wird gleichzeitig bei 30-35° gehalten und die Rcakionssuspension bis zur vollständigen Diazotierung während 2-3 Stunden bei dieser Temperatur nachgerührt und anschliessend auf 10° abgekühlt.
Die Diazosuspension lässt man zu einer neutralen Lösung von 45 Teilen 2-(4'-Amino-3'-sulfo-anilino)-5-hydroxynaphthalin-7-sulfonsäure in 250 Teilen Wasser zufliessen. Gleichzeitig wird der pH-Wert mit 4N Natronlauge bei 8-8,5 gehalten. Es wird eine Stunde bei Raumtemperatur nachgeführt und der Farbstoff durch Zugabe von Natriumchlorid ausgefällt und abfiltriert. Es entspricht in Form der freien Säure der Formel 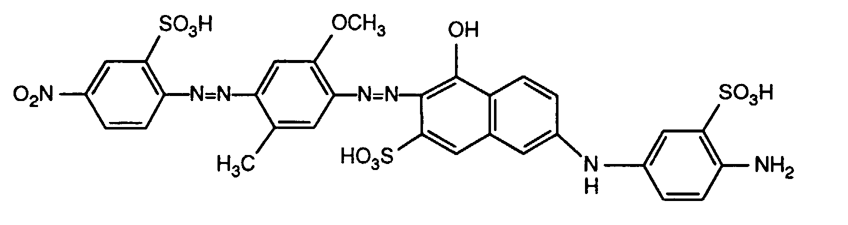 und färbt Papier, Baumwolle und Leder in reinen rotstichig blauen Tönen mit guter Lichtechtheit.

Beispiel 2 bis 99: Man arbeitet wie im Beispiel 1 beschrieben, verwendet jedoch als Aminoazofarbstoff die durch Diazotierung der in Spalte 2 der folgenden Tabelle aufgeführten Diazokomponenten und Kupplung auf die in Spalte 3 aufgeführten Mittelkomponenten hergestellten Farbstoffe. Durch erneute Diazotierung und Kupplung wie im Beispiel 1 beschrieben auf die in Spalte 4 aufgeführten Kupplungskomponenten erhält man Azofarbstoffe, welche Papier in blauen Farbtönen mit guter Lichtechtheit färben.

In den Beispielen 8 und 60 wird bei der Diazokomponente die Aminogruppe in m-Stellung zur Sulfogruppe diazotiert, nachdem die Aminogruppe in o-Stellung zur Sulfogruppe vorher durch eine Schutzgruppe geschützt wurde.

Analog wird in den Beispielen 85 und 93 zunächst eine der beiden Aminogruppen durch eine Schutzgruppe geschützt und dann die andere Aminogruppe diazotiert.

Im Beispiel 24 muss die OH-Gruppe der Diazokomponente auf übliche Weise während der Diazotierung durch eine Schutzgruppe geschützt werden. In den Beispielen 81 bis 83 wird die Sulfogruppe der Mittelkomponente im Anschluss an die erste Kupplung durch Sulfonierung auf übliche Art eingeführt.

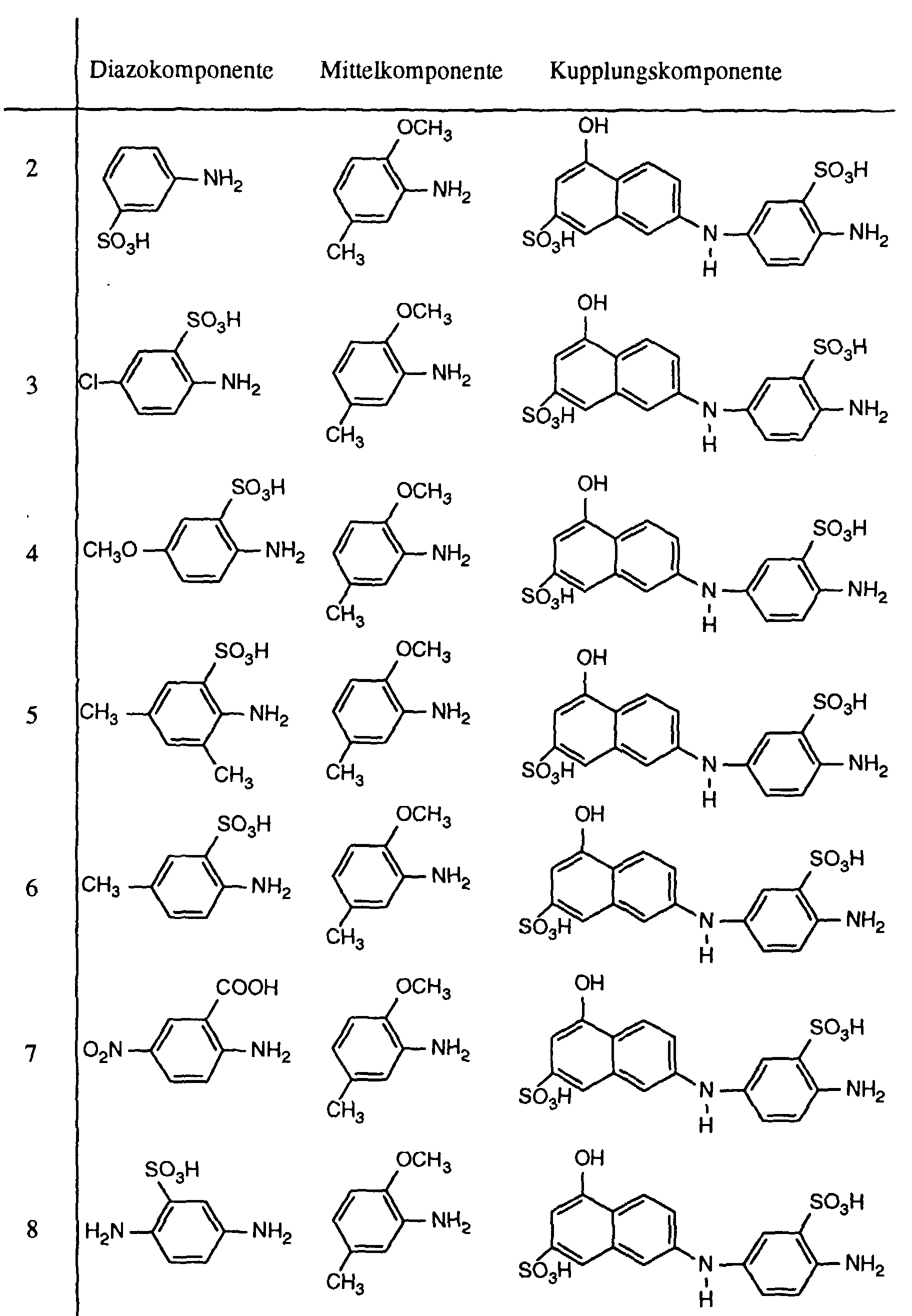

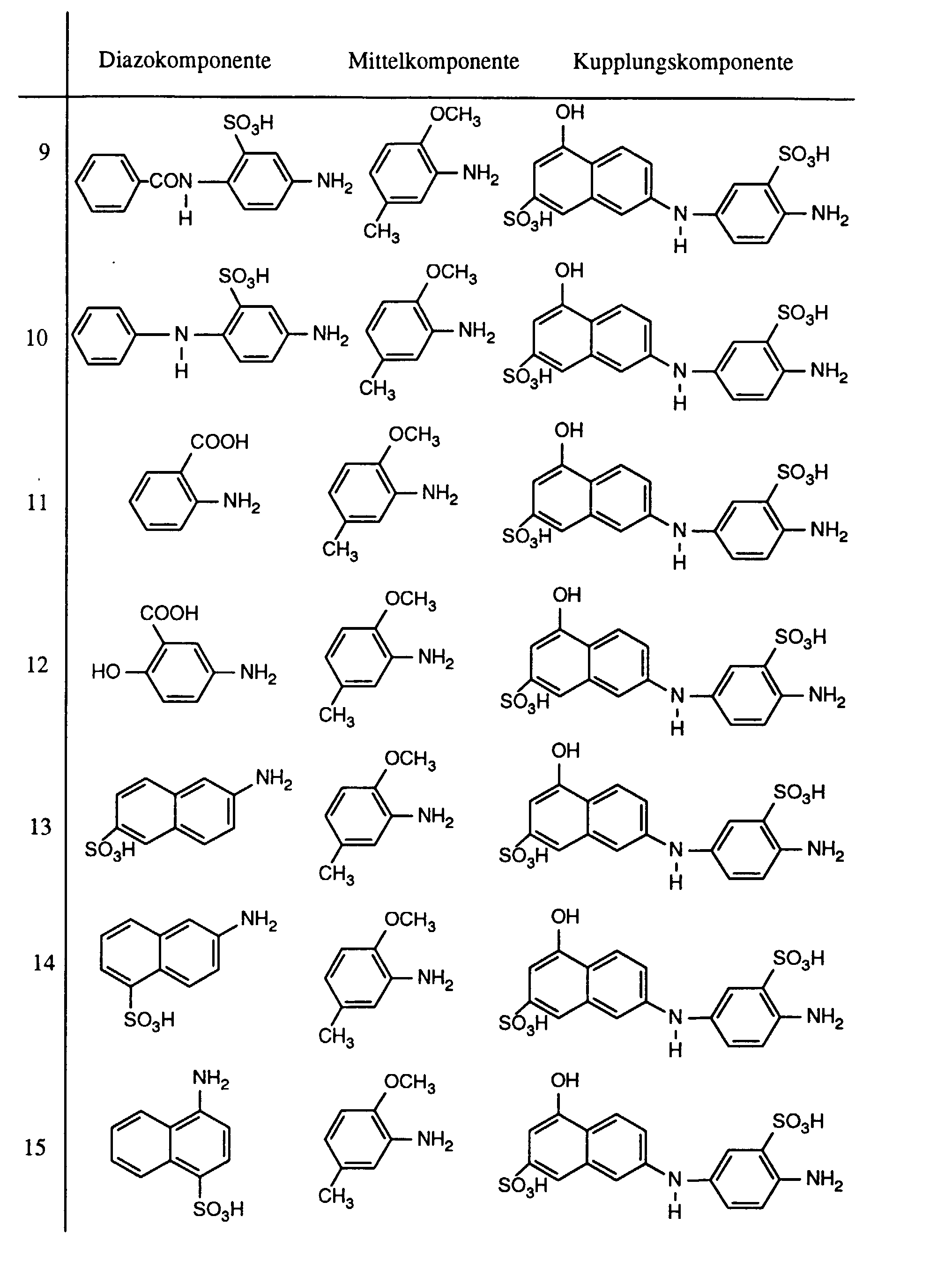

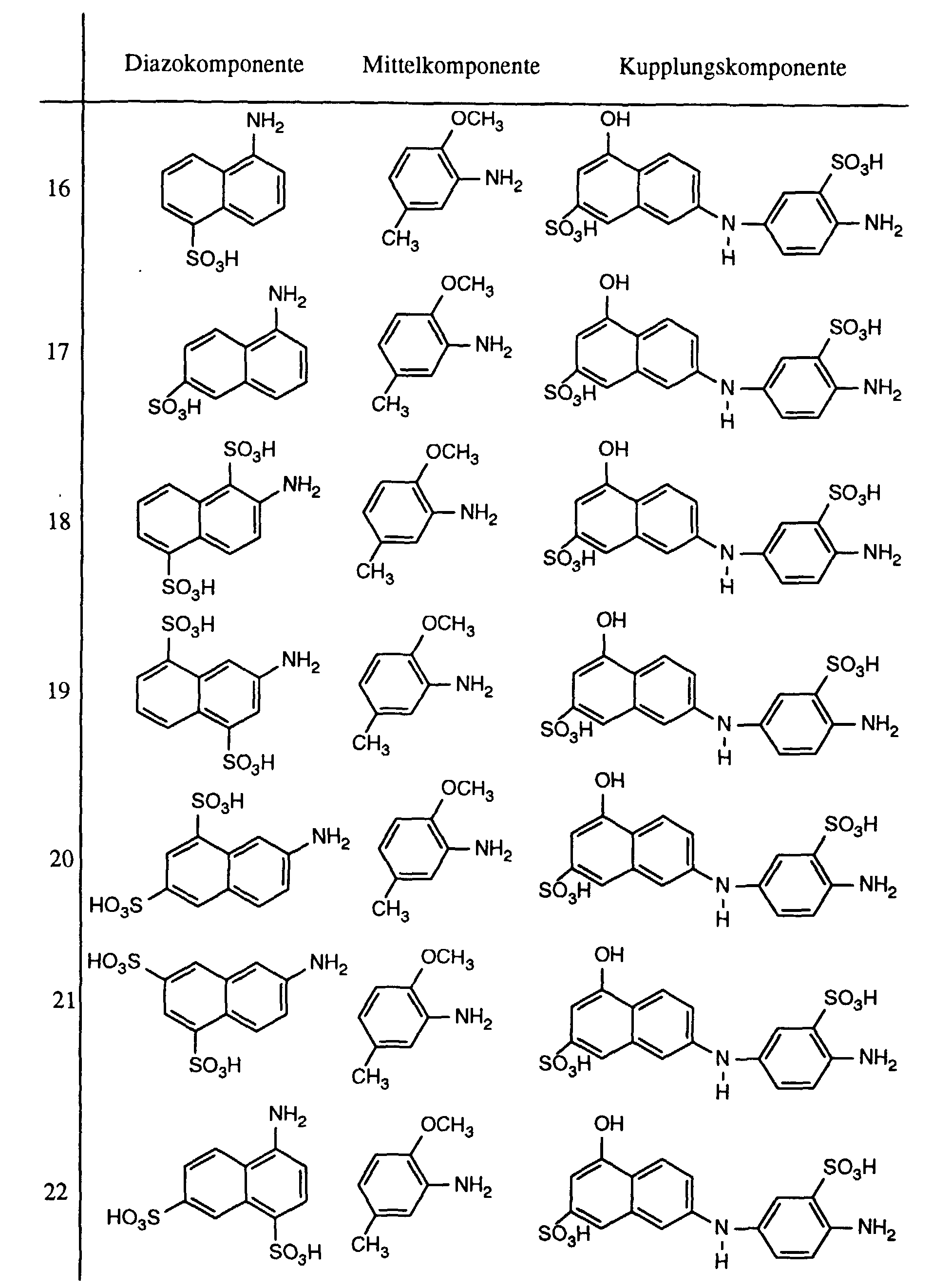

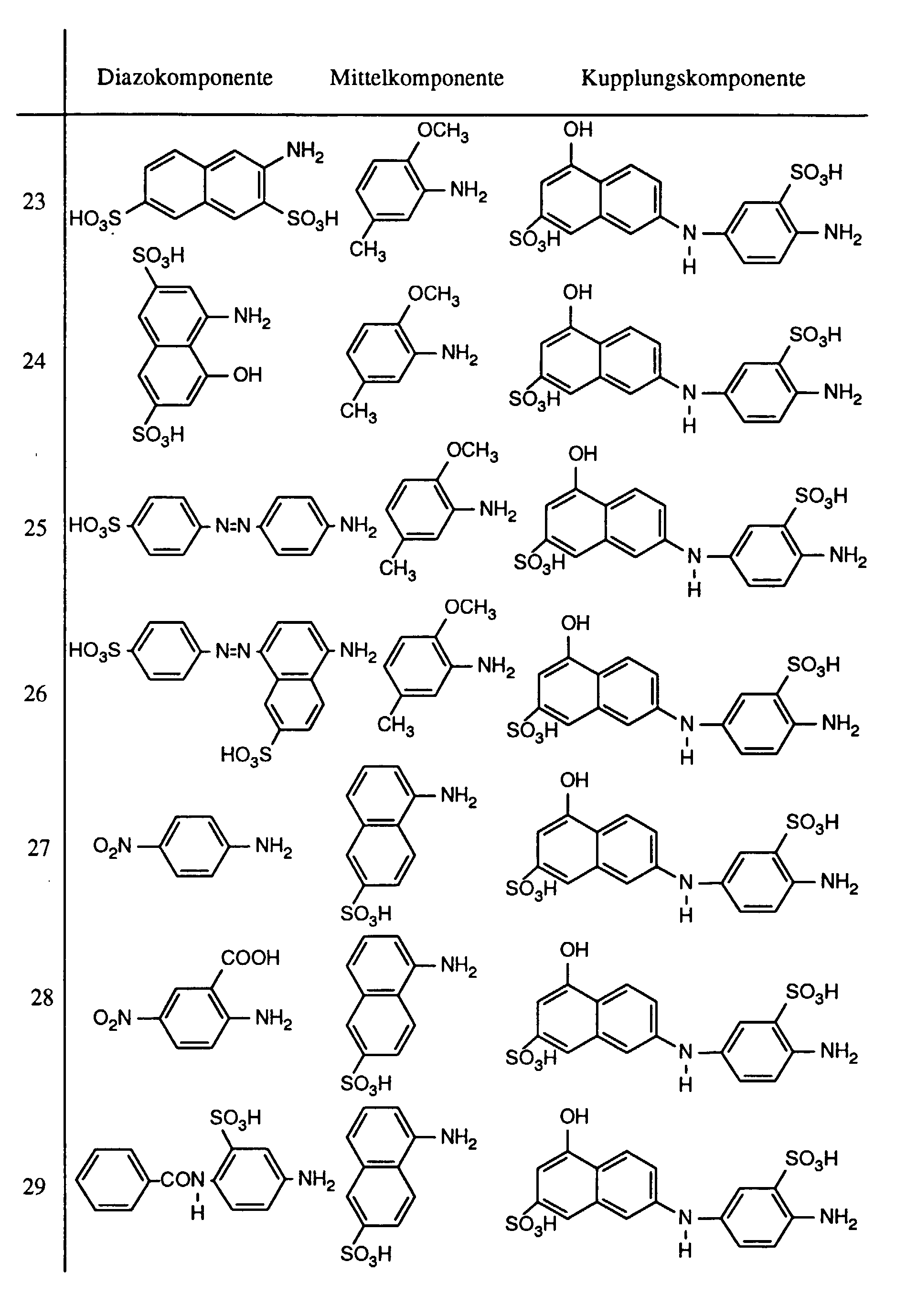

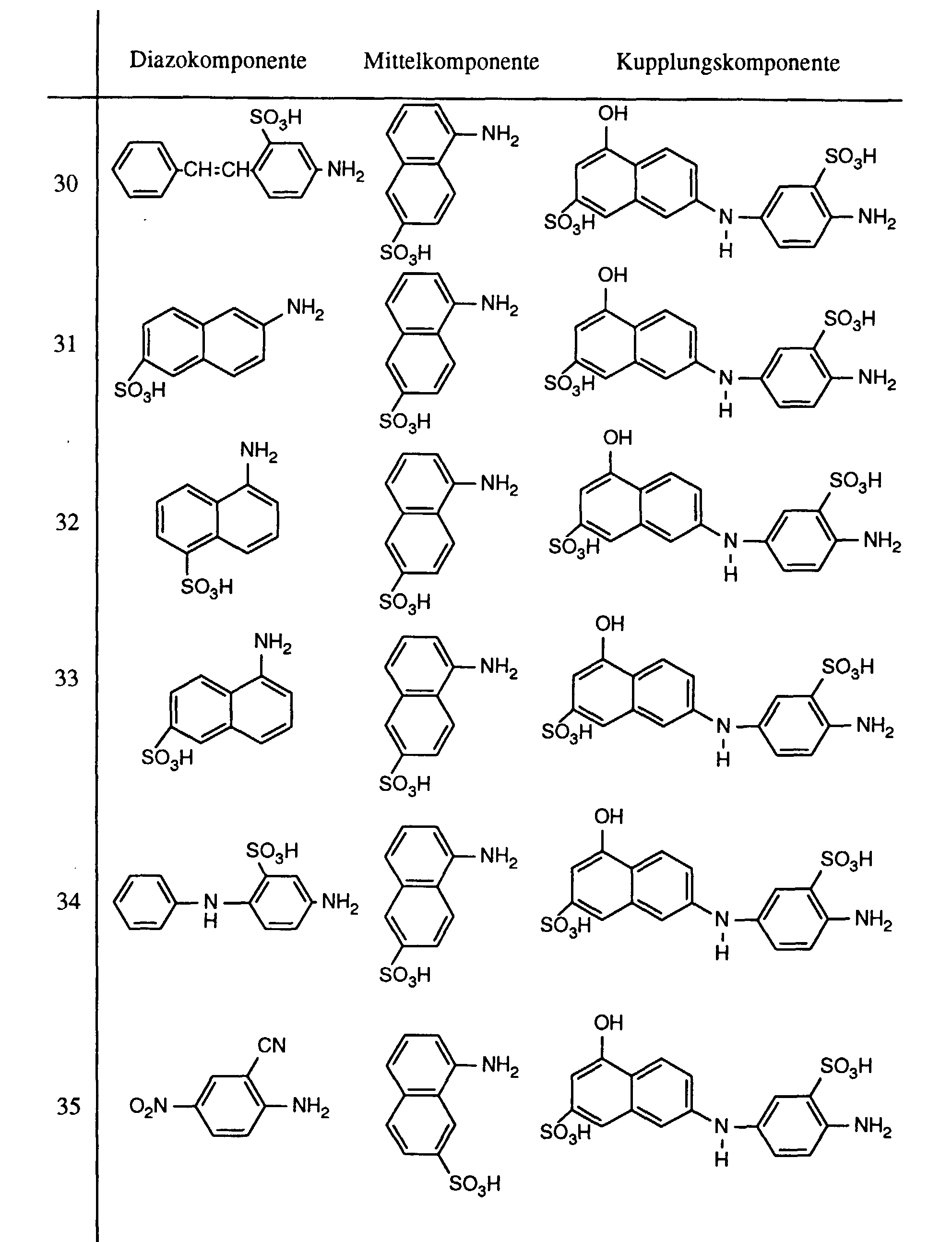

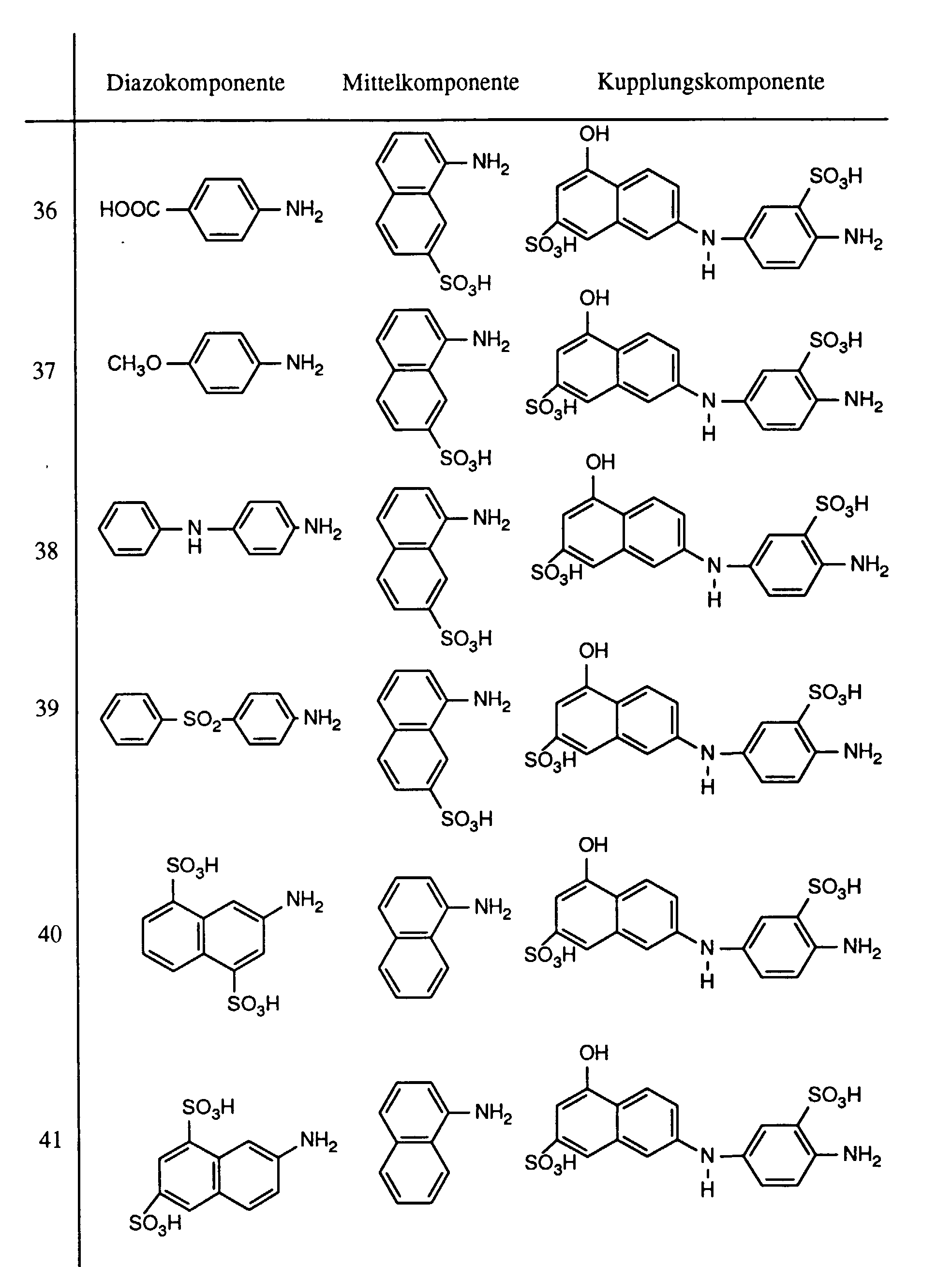

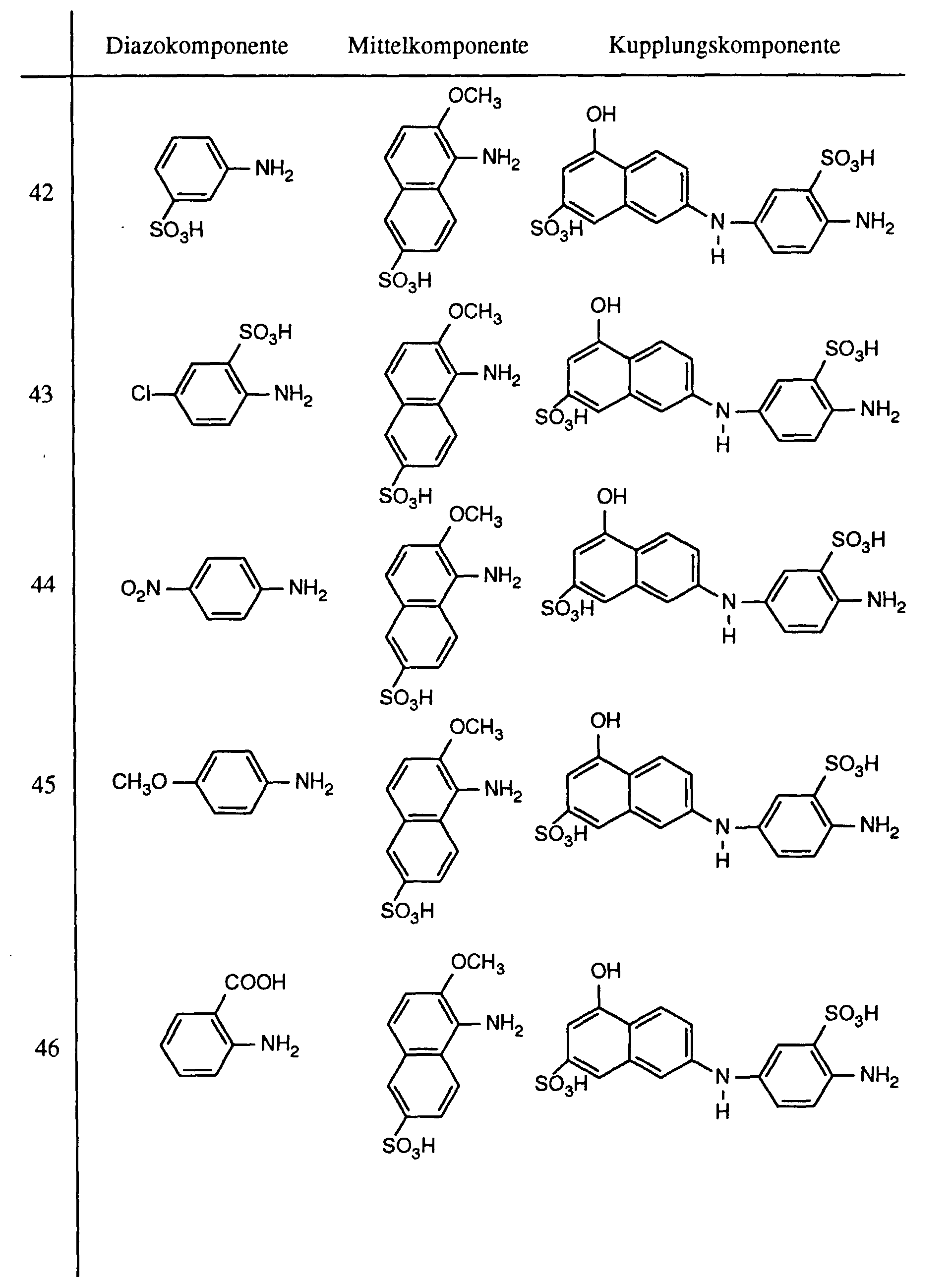

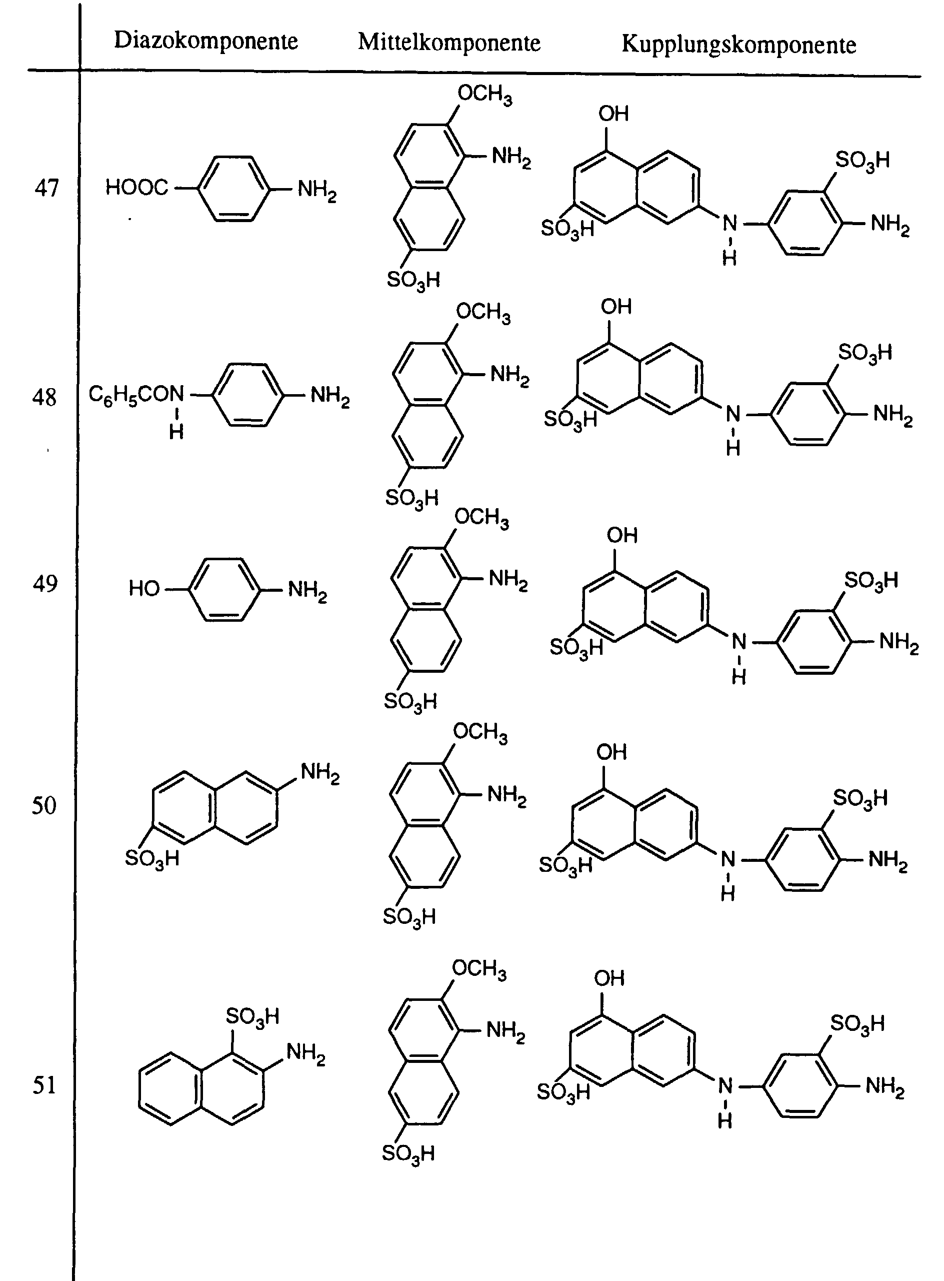

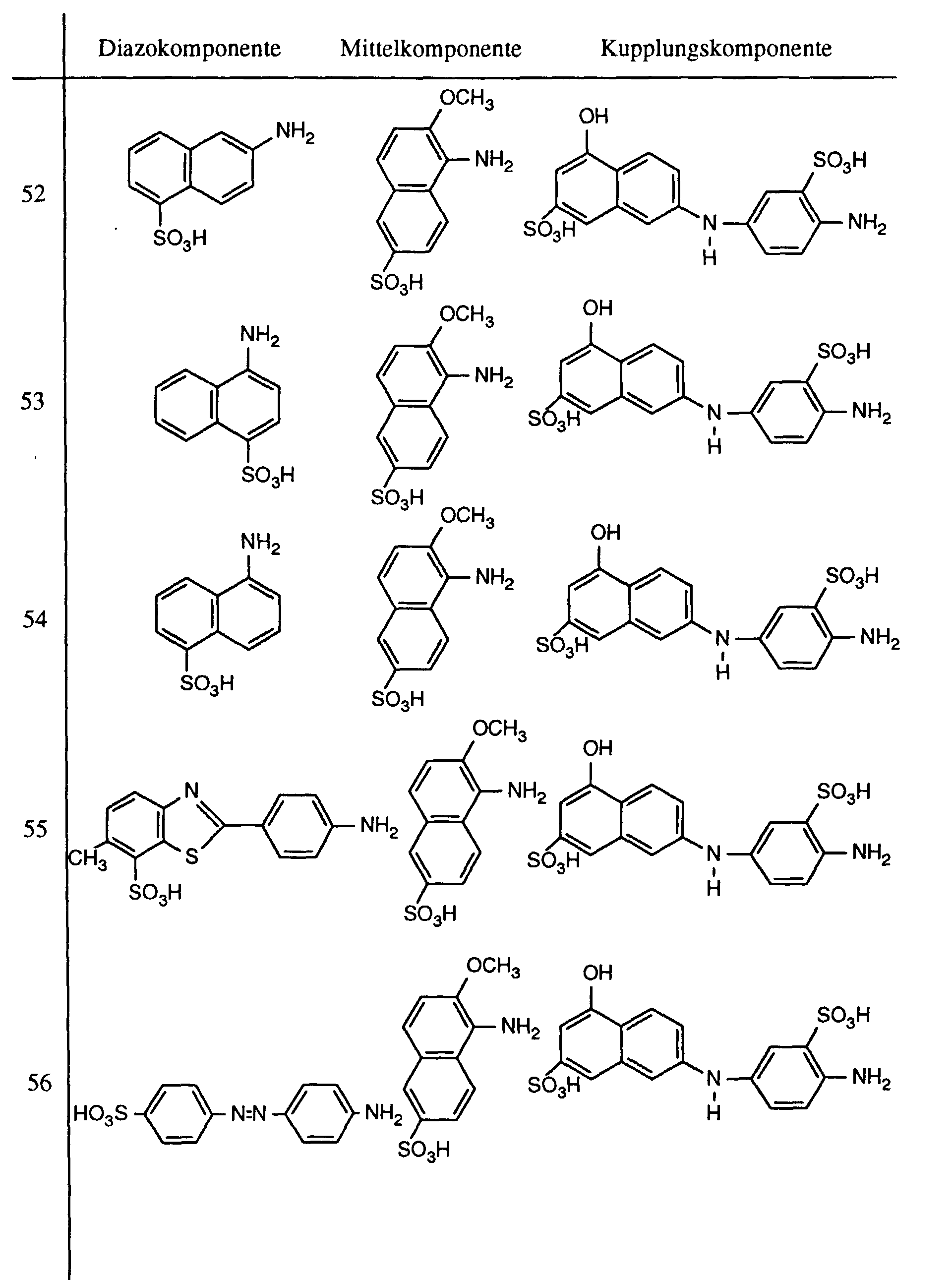

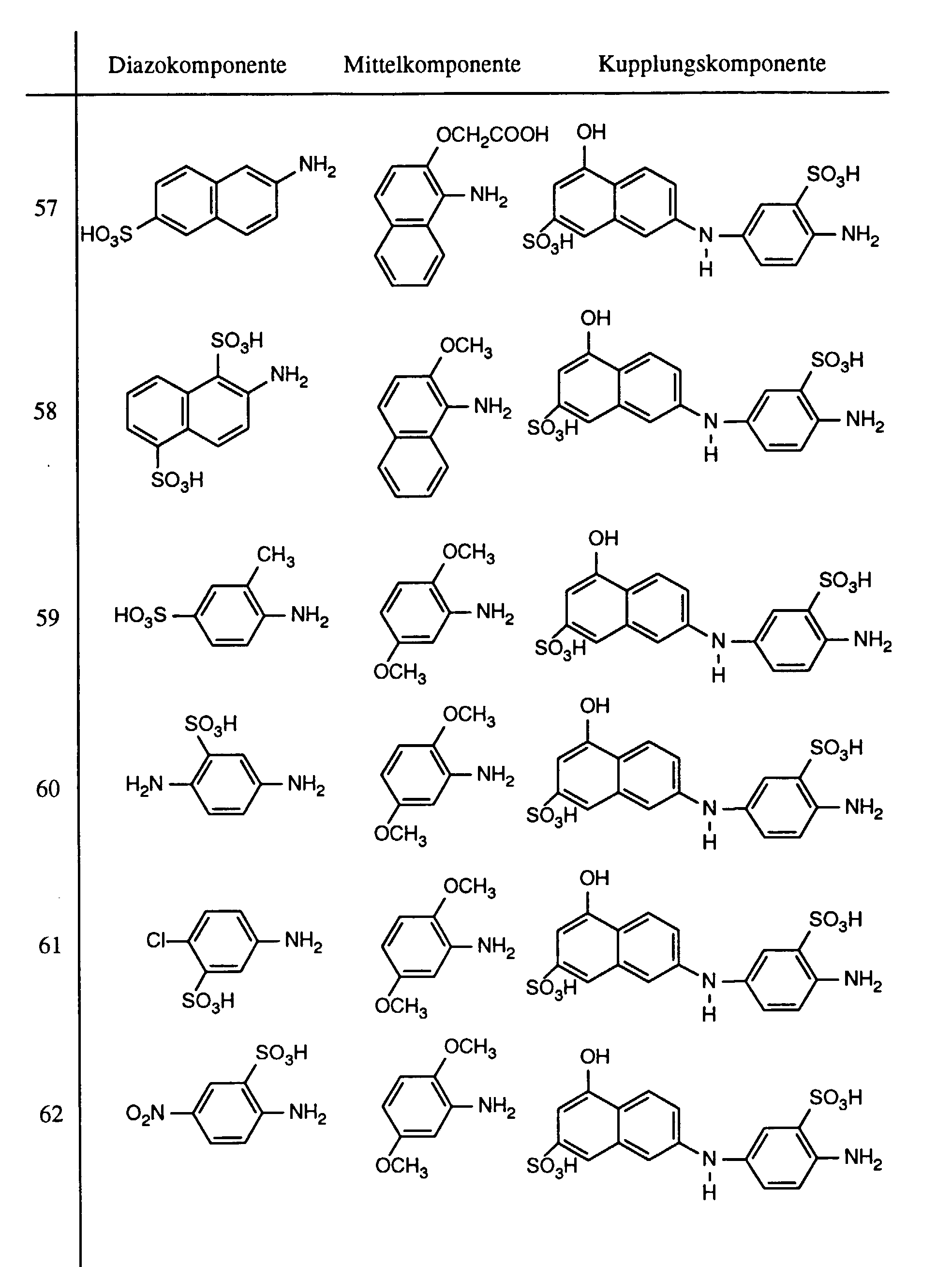

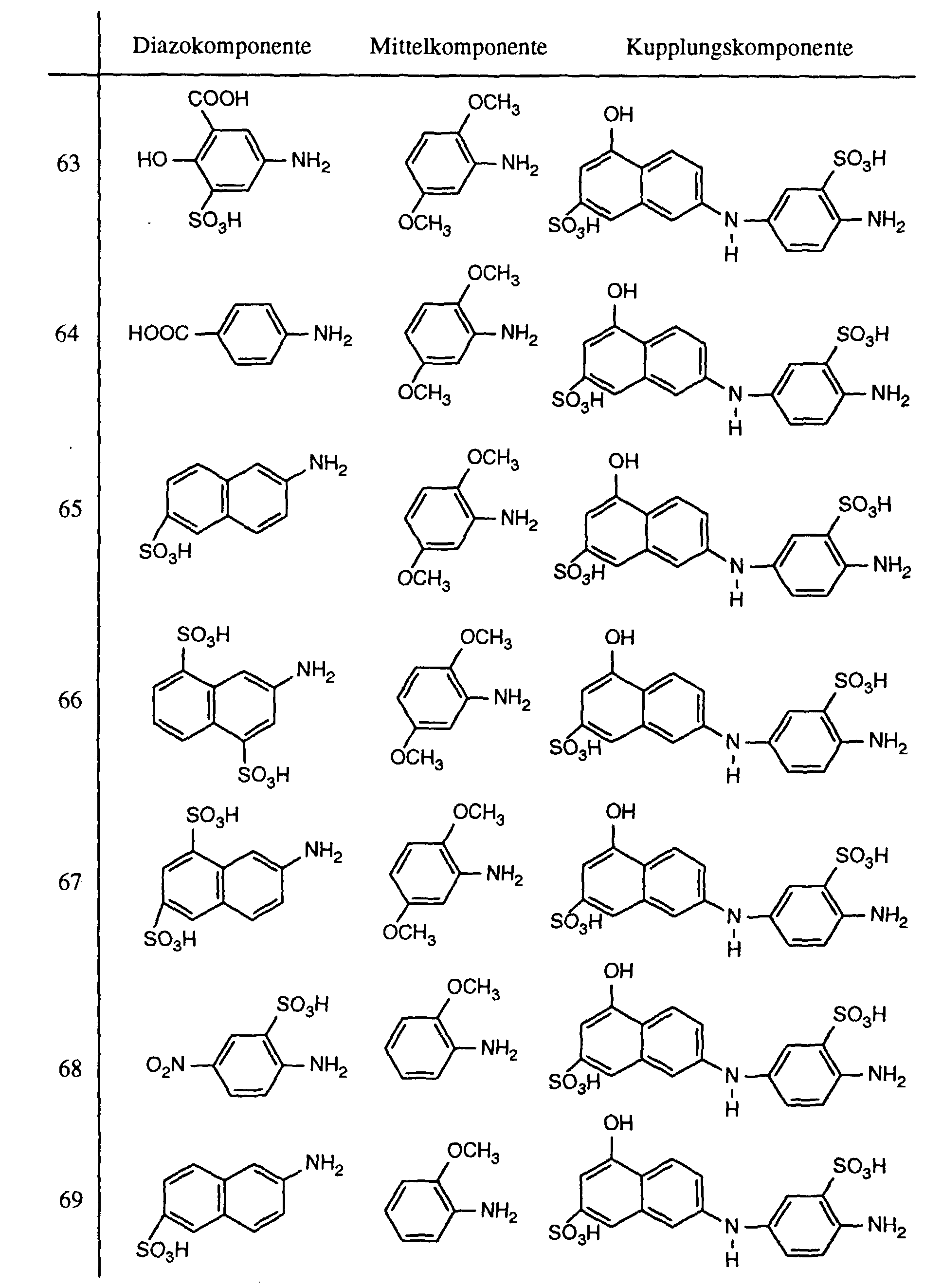

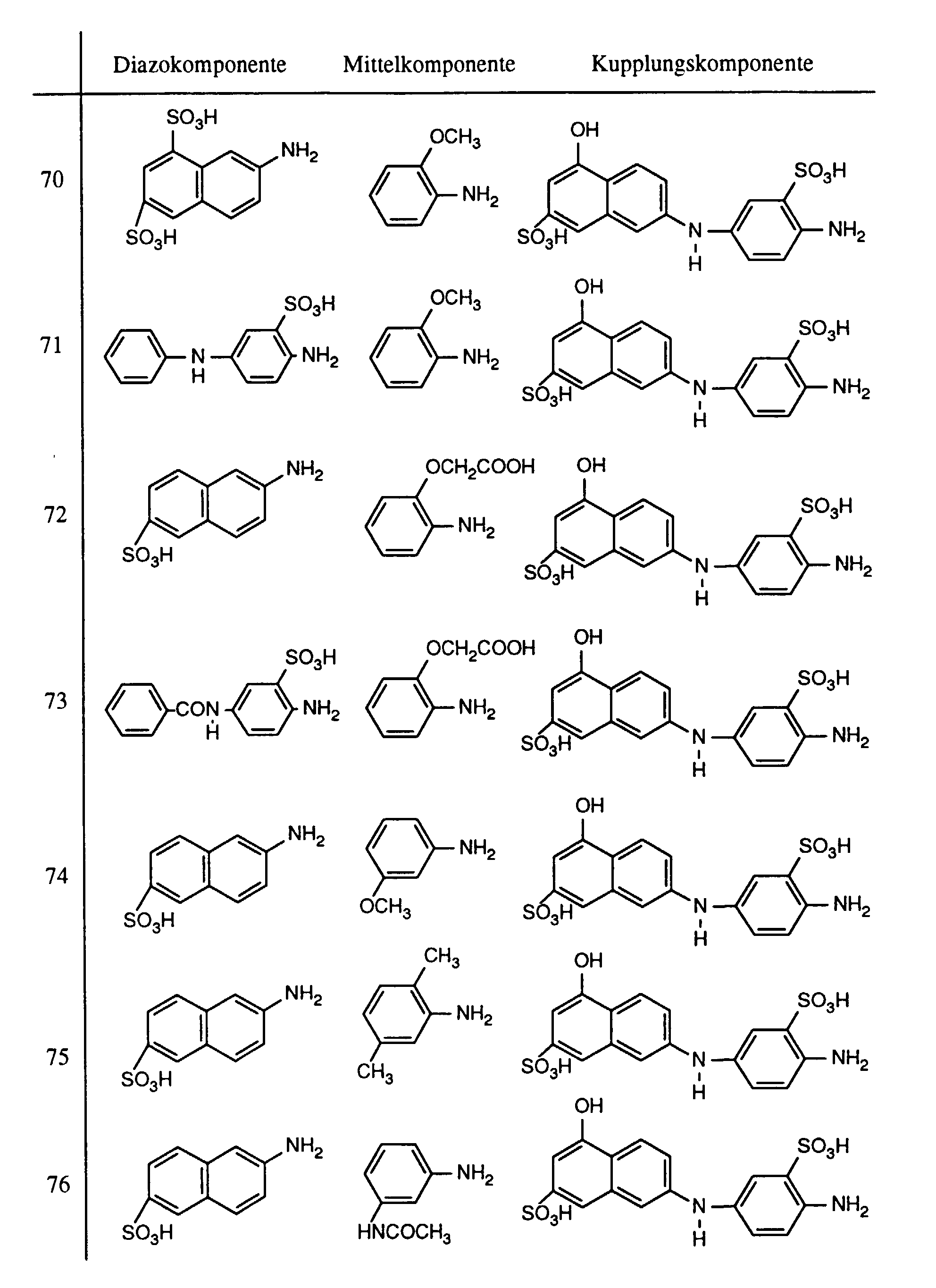

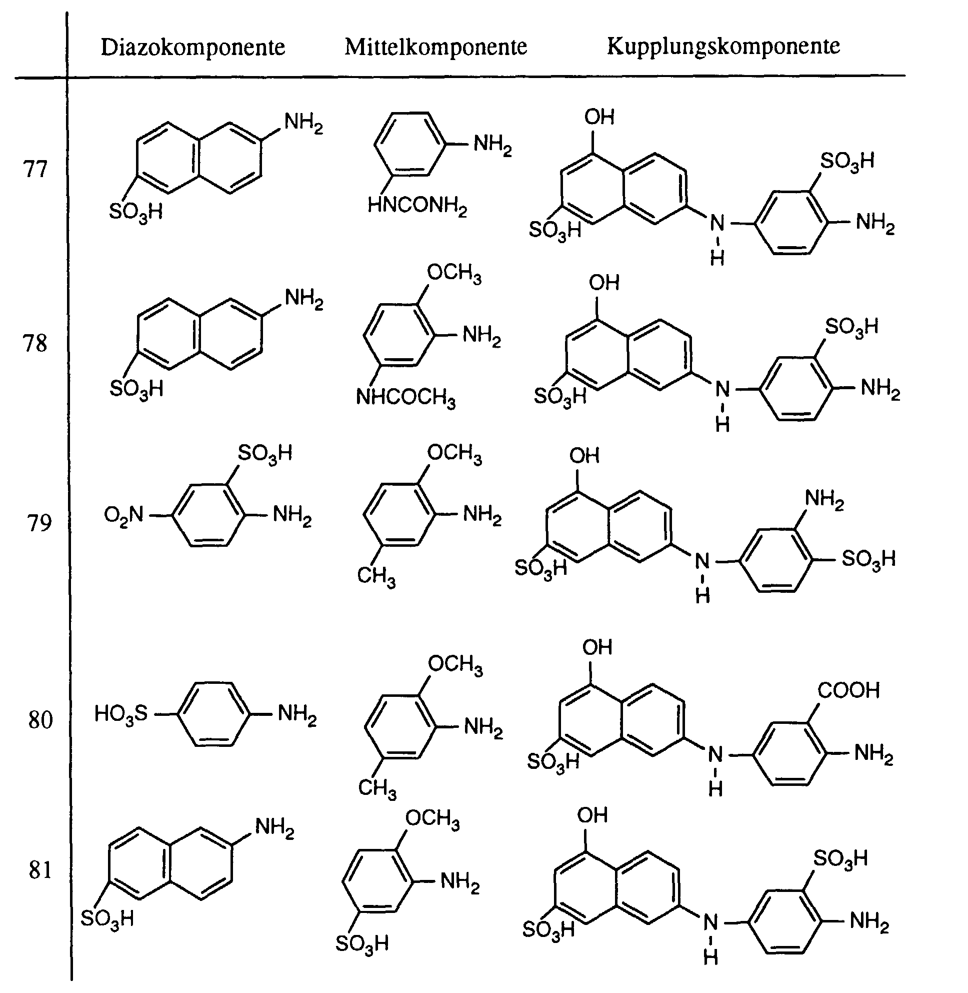

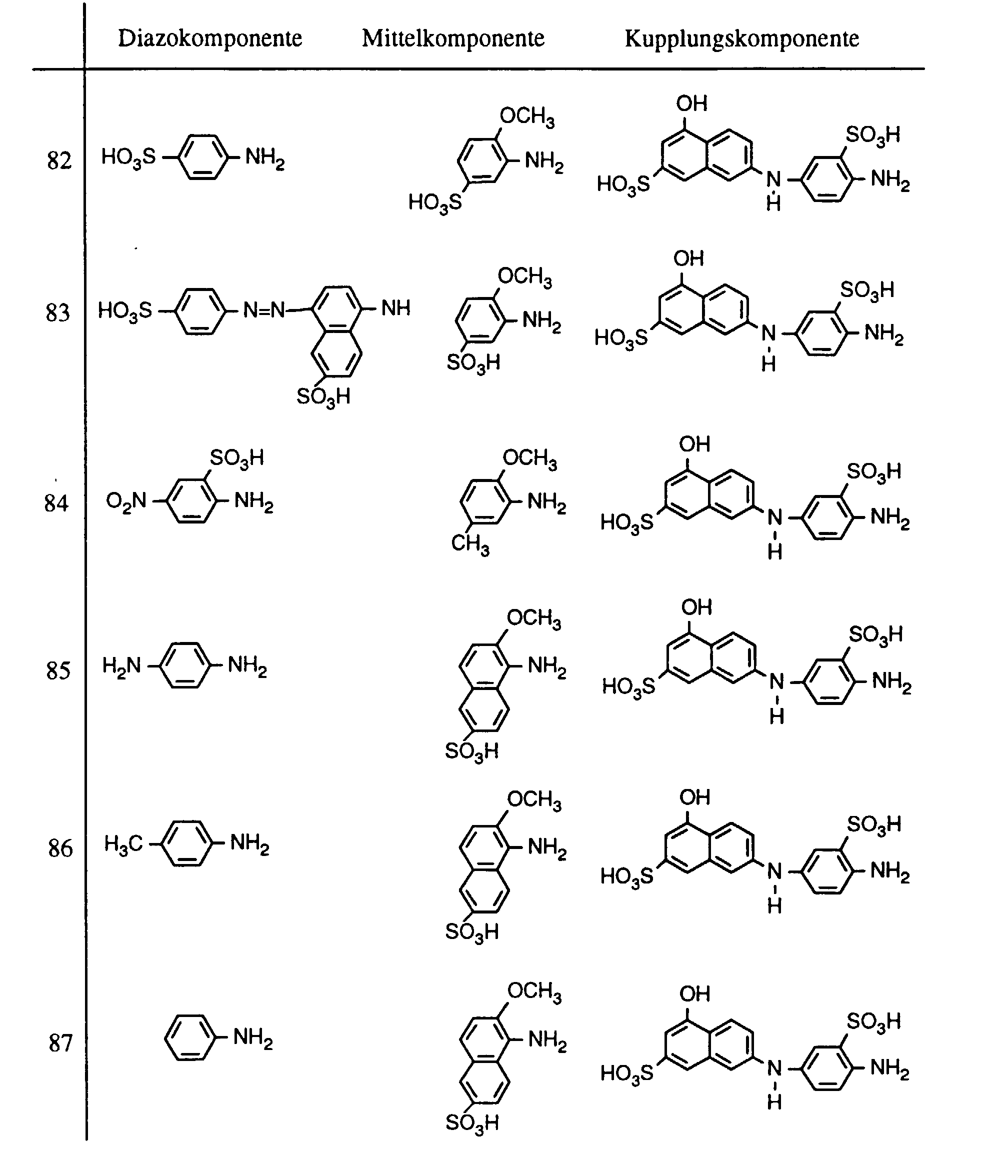

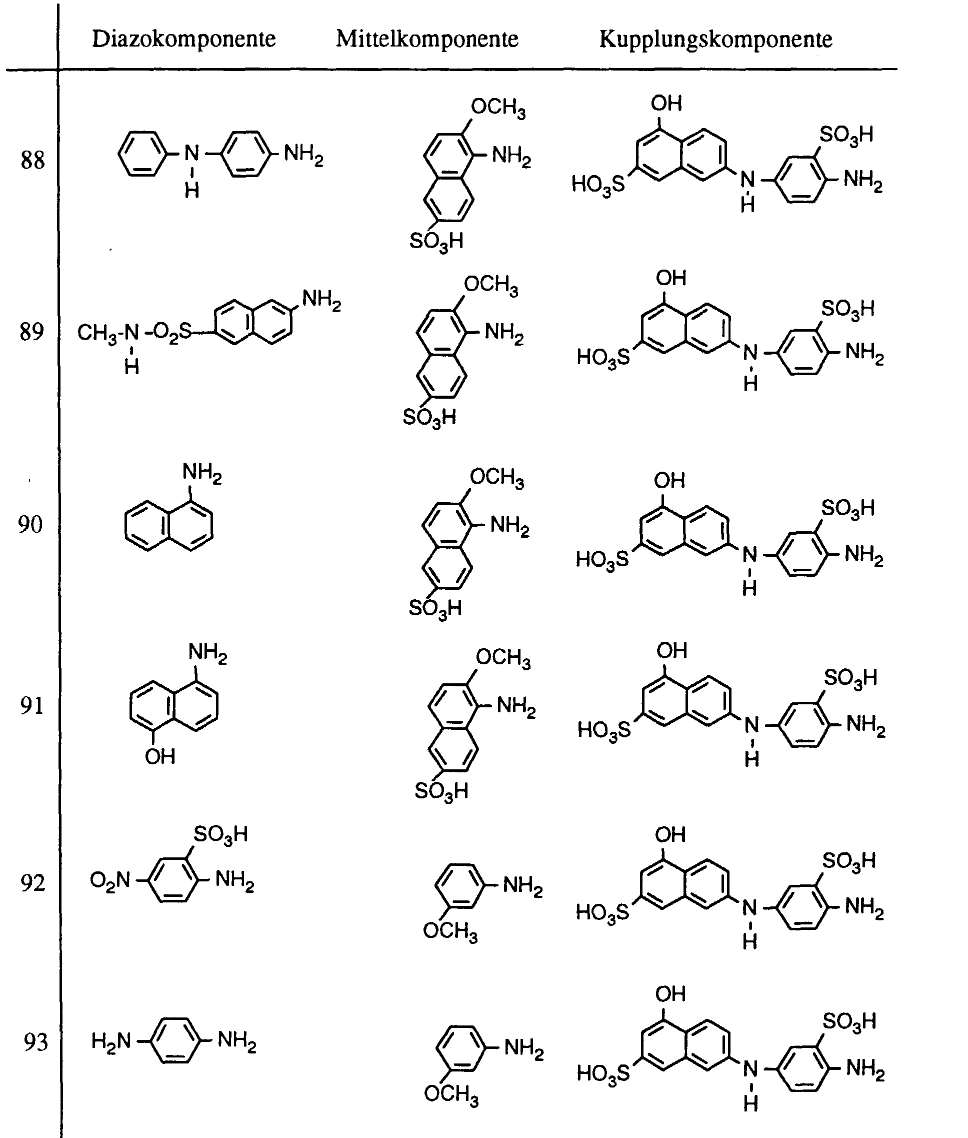

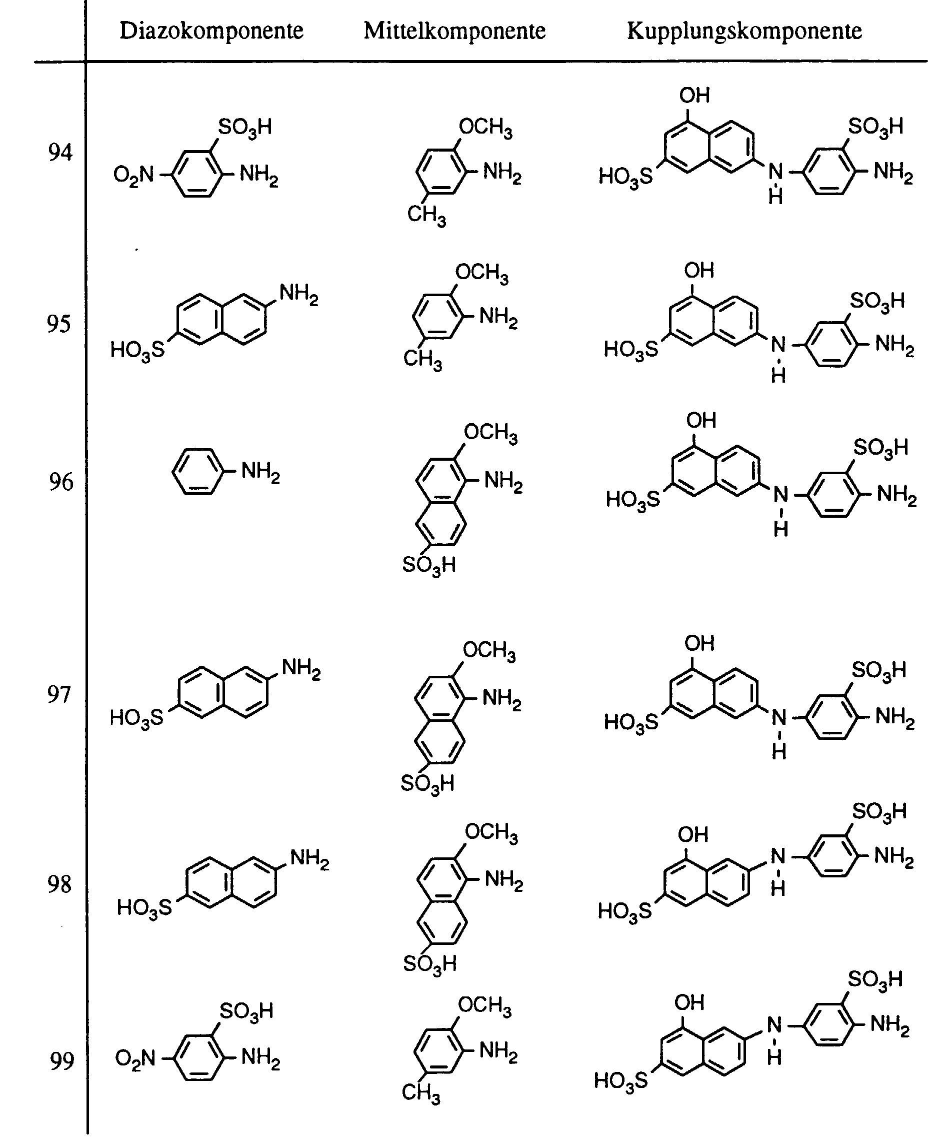

Beispiel 100: 57,2 Teile Aminoazofarbstoff, hergestellt durch Kupplung von 2-Amino-5-nitro-anisol mit 1-Hydroxy-8-benzoylaminonaphthalin-3,6-disulfonsäure und anschliessende Reduktion werden in 600 ml Wasser neutral bei 75° gelöst, auf 0° abgekühlt und anschliessend mit 6,9 Teilen Natriumnitrit versetzt. Die erhaltene Suspension wird sofort durch Zugabe von 25 ml Salzsäure (32 %ig) diazotiert und 1 Stunde bei Raumtemperatur nachgerührt.

45 Teile 2-(4'-Amino-3'-sulfo-anilino)-5-hydroxynaphthalin-7-sulfonsäure werden in 250 Teilen Wasser mit Natronlauge bei pH 8 gelöst und auf 5° abgekühlt. Die vorstehende Diazosuspension wird zu dieser Lösung zugetropft und der pH-Wert mit 4N Natronlauge bei 8-8,5 gehalten. Es wird 1 Stunde bei Raumtemperatur nachgerührt und der Farbstoff durch Zugabe von Natriumchlorid ausgefällt und filtriert. Er entspricht in Form der freien Säure der Formel 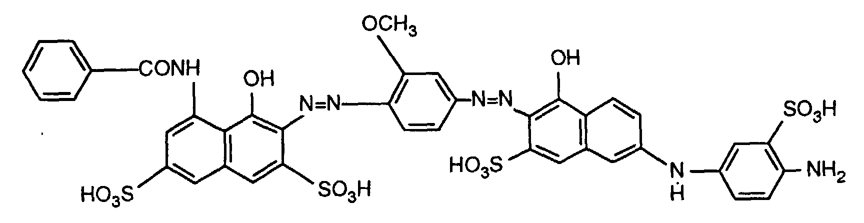 und färbt Papier, Baumwolle und Leder in blauen Tönen mit guter Lichtechtheit.

Beispiele 101 bis 133: Auf analoge Art wie im Beispiel 100 beschrieben können die in der folgenden Tabelle aufgeführten Papierfarbstoffe hergestellt werden, indem man die Mittelkomponente diazotiert, mit der ersten Kupplungskomponente kuppelt, anschliessend die Nitrogruppe des erhaltenen Azofarbstoffs reduziert, den gebildeten Aminoazofarbstoff diazotiert und auf die zweite Kupplungskomponente kuppelt. Falls eine der Kupplungskomponenten eine freie Aminogruppe enthält, so wird diese vor der Kupplung in bekannter Weie geschützt, z.B. durch Acylierung, und nach der Kupplung wird die Schutzgruppe wieder abgespalten.
Als Mittelkomponente kann man anstelle der Aminonitro-Verbindung auch die entsprechenden Amino-acylamino-Verbindungen einsetzen und nach der ersten Kupplung die Acylaminogruppe in die Aminogruppe überführen.
Die in der folgenden Tabelle aufgeführten Farbstoffe färben Papier, Baumwolle und Leder in blauen Nuancen mit guter Lichtechtheit.

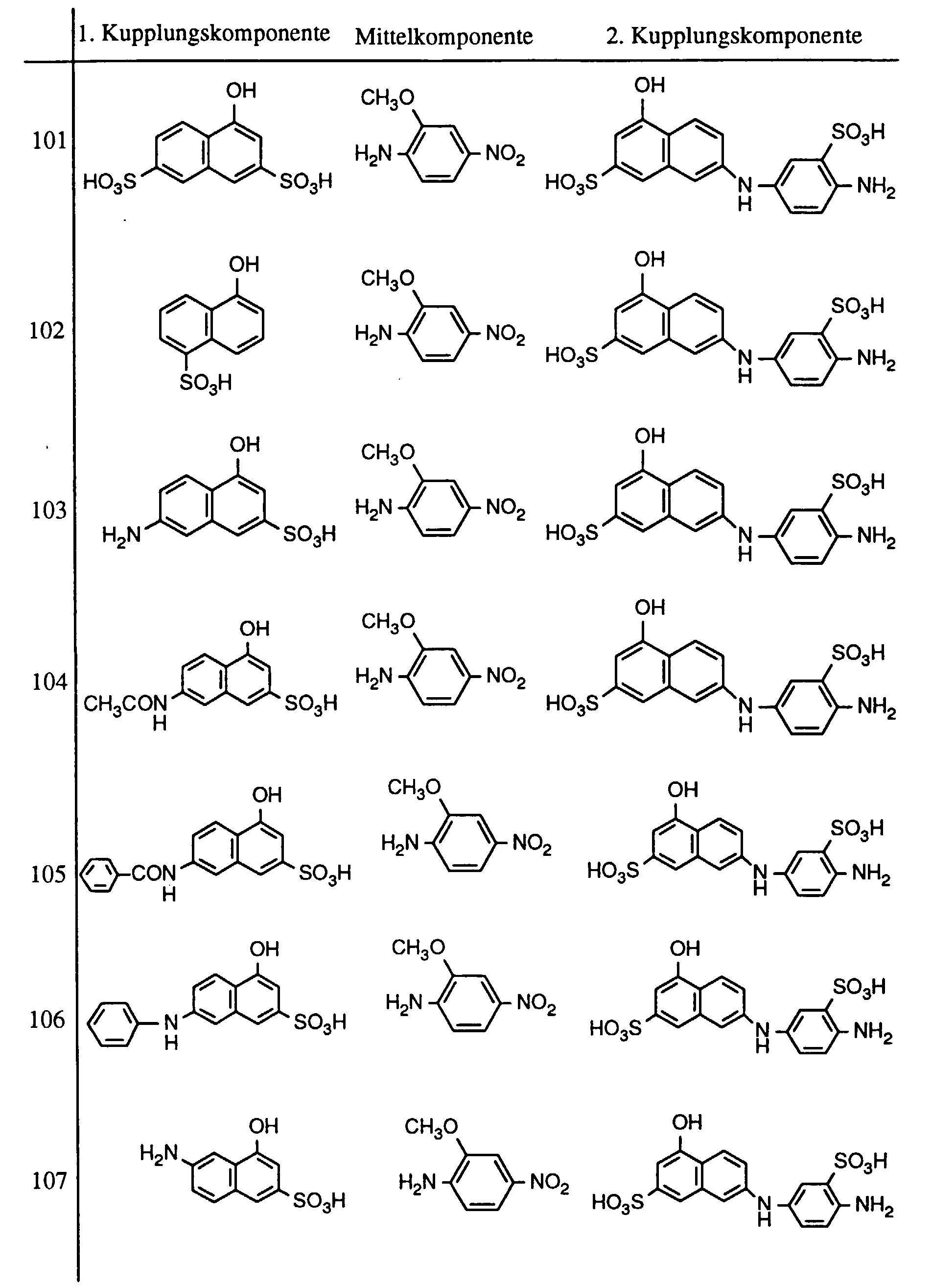

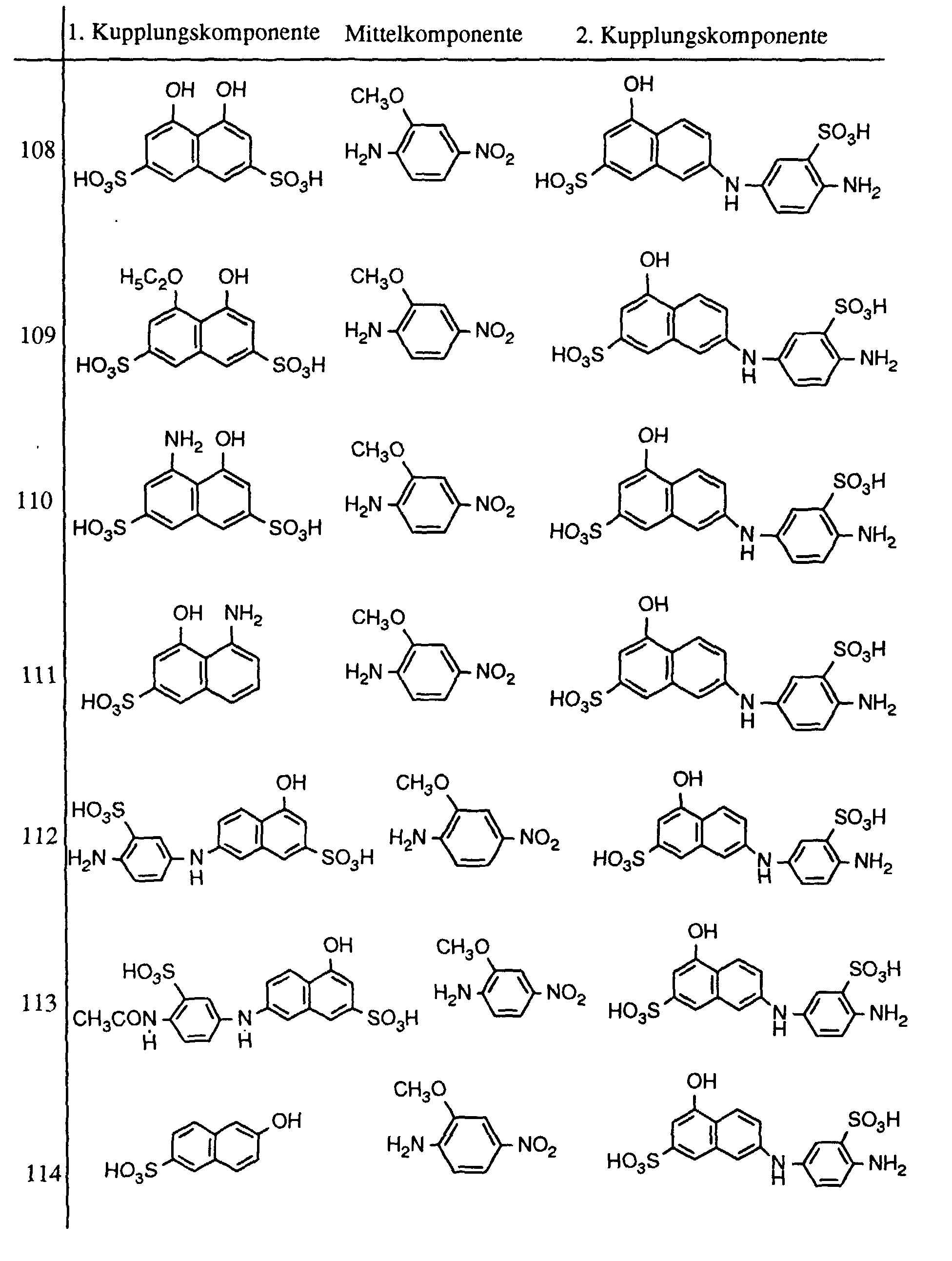

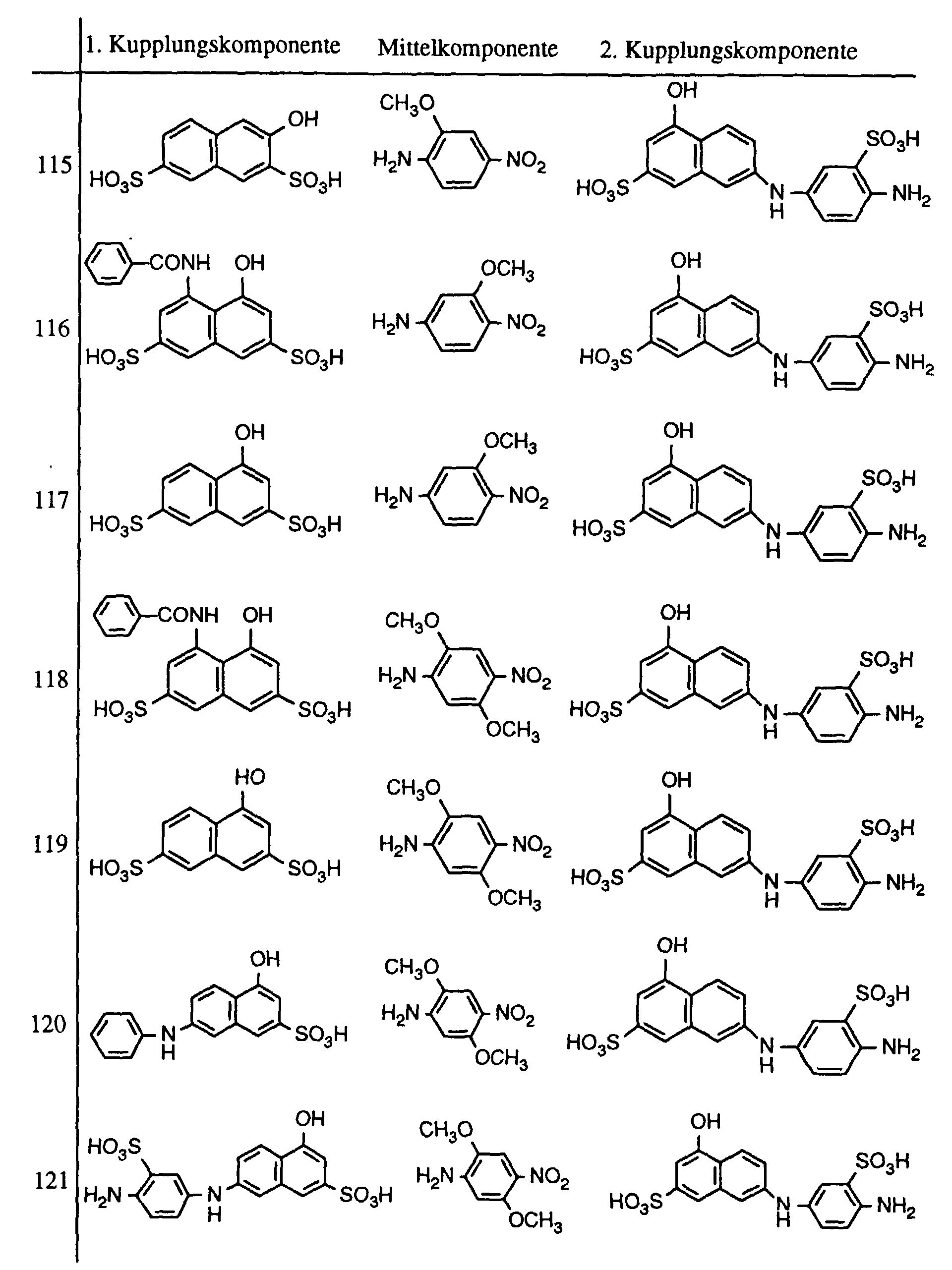

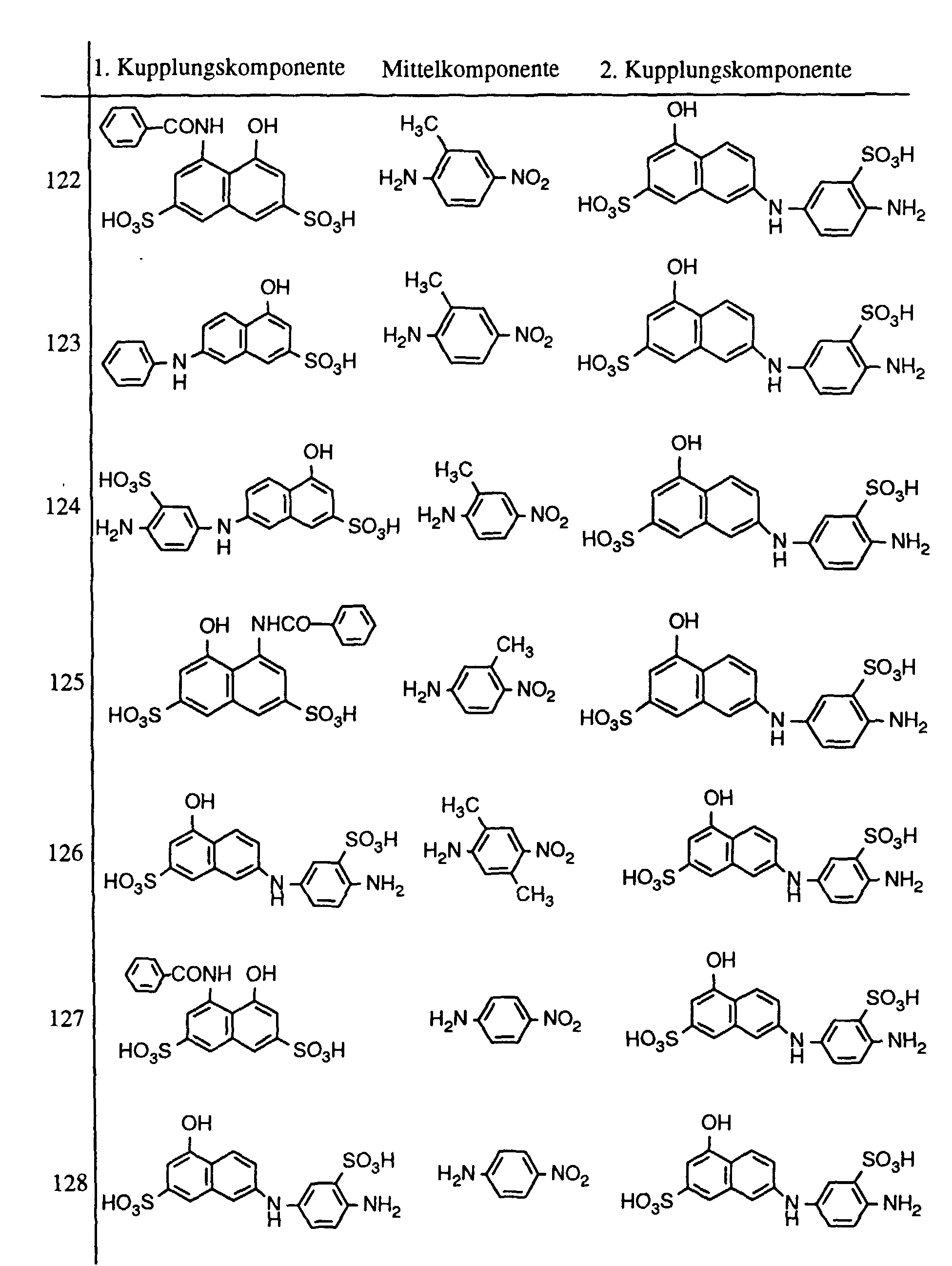

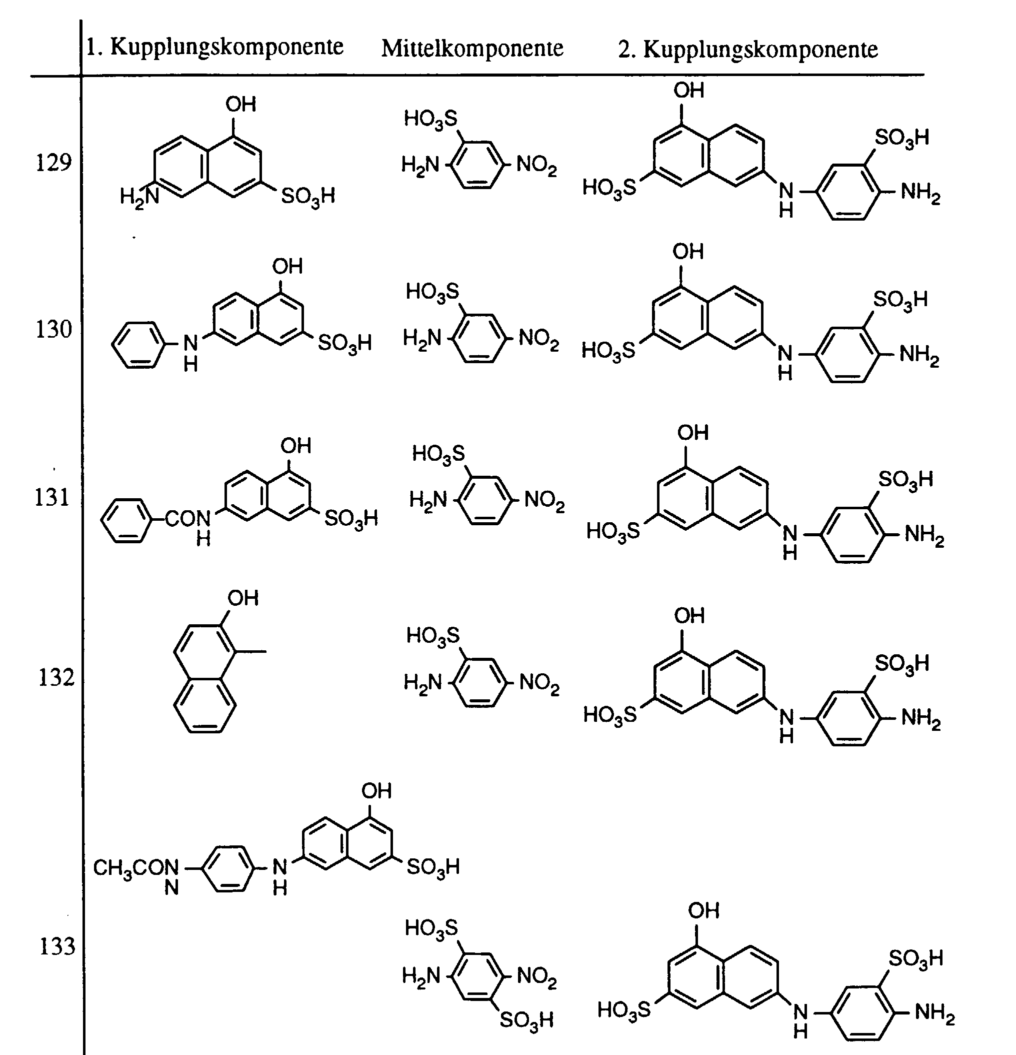

Beispiel 134: 51,4 Teile des durch saure Kupplung von 2-Amino-5-acetamino-benzolsulfonsäure mit 2-Anilino-5-hydroxynaphthalin-7-sulfonsäure und anschliessende Abspaltung der Acetylgruppe hergestellten Monoazofarbstoffes werden in 500 Teilen Wasser neutral gelöst. Man versetzt mit 6,9 Teilen Natriumnitrit, kühlt auf 10° und lässt die Lösung in eine Vorlage aus 25 Teilen Salzsäure (32 %ig) und 50 Teilen Eiswasser fliessen. Die Temperatur wird gleichzeitig bei 5-10° gehalten. Man rührt 1 Stunde nach und lässt dann die Reaktionsmasse zu einer neutralen Lösung von 45 Teilen 2-(4'-Amino-3'-sulfo-anilino)-5-hydroxynaphthalin-7-sulfonsäure in 250 Teilen Wasser zufliessen. Der pH-Wert wird mit 4N Natronlauge bei 8-8,5 gehalten. Es wird 1 Stunde bei Raumtemperatur nachgerührt und der Farbstoff durch Zugabe von Natriumchlorid ausgefällt und abfiltriert. Er entspricht in Form der freien Säure der Formel 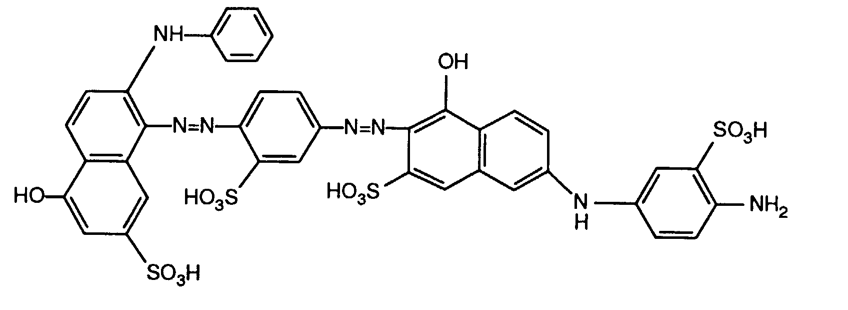 und färbt Papier in blauen Tönen mit guter Nassechtheit

Beispiel 135 bis 146: Analog zu Beispiel 134 können die in der folgenden Tabelle aufgeführten Farbstoffe hergestellt werden. Sie färben Papier ebenfalls in blauen Tönen.

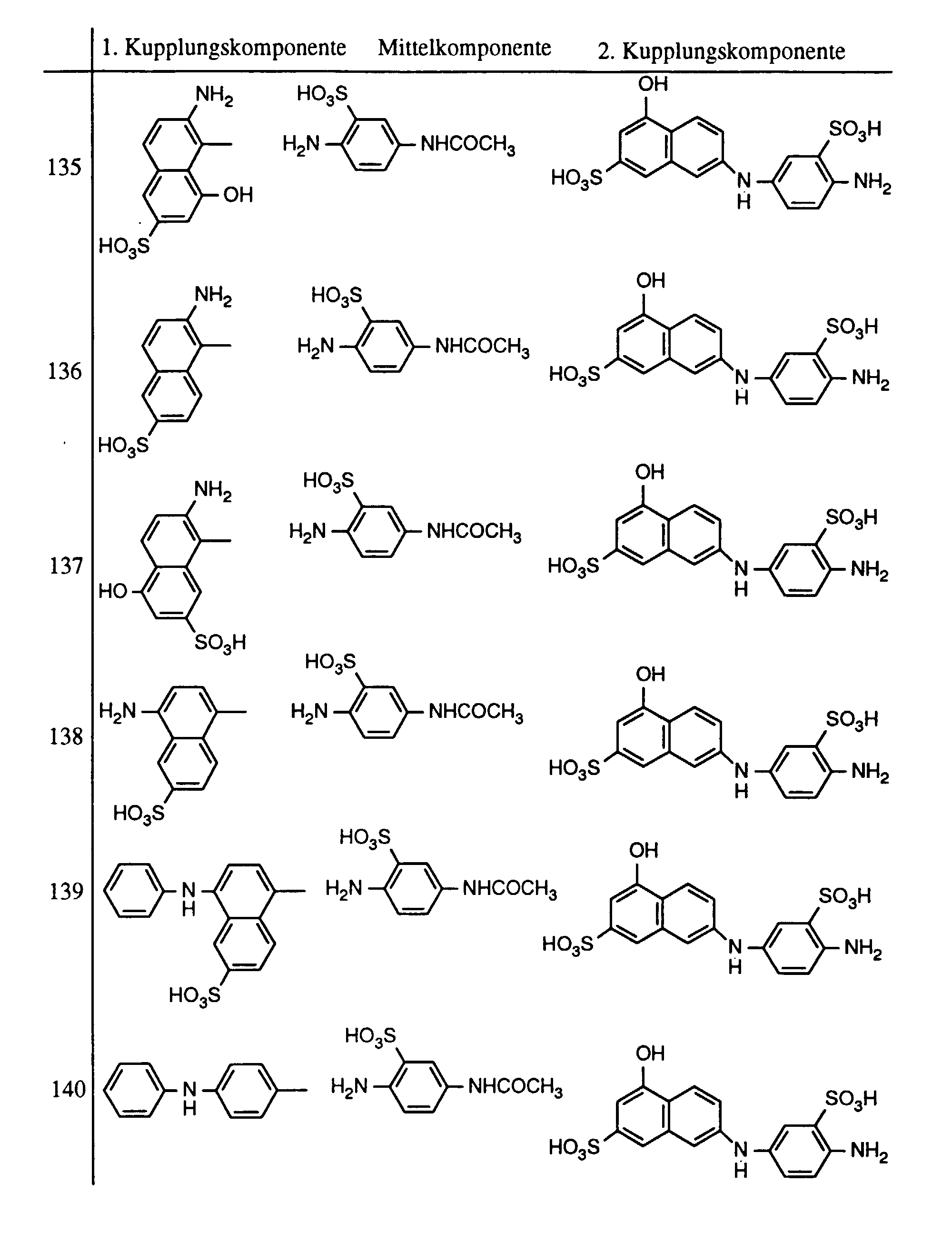

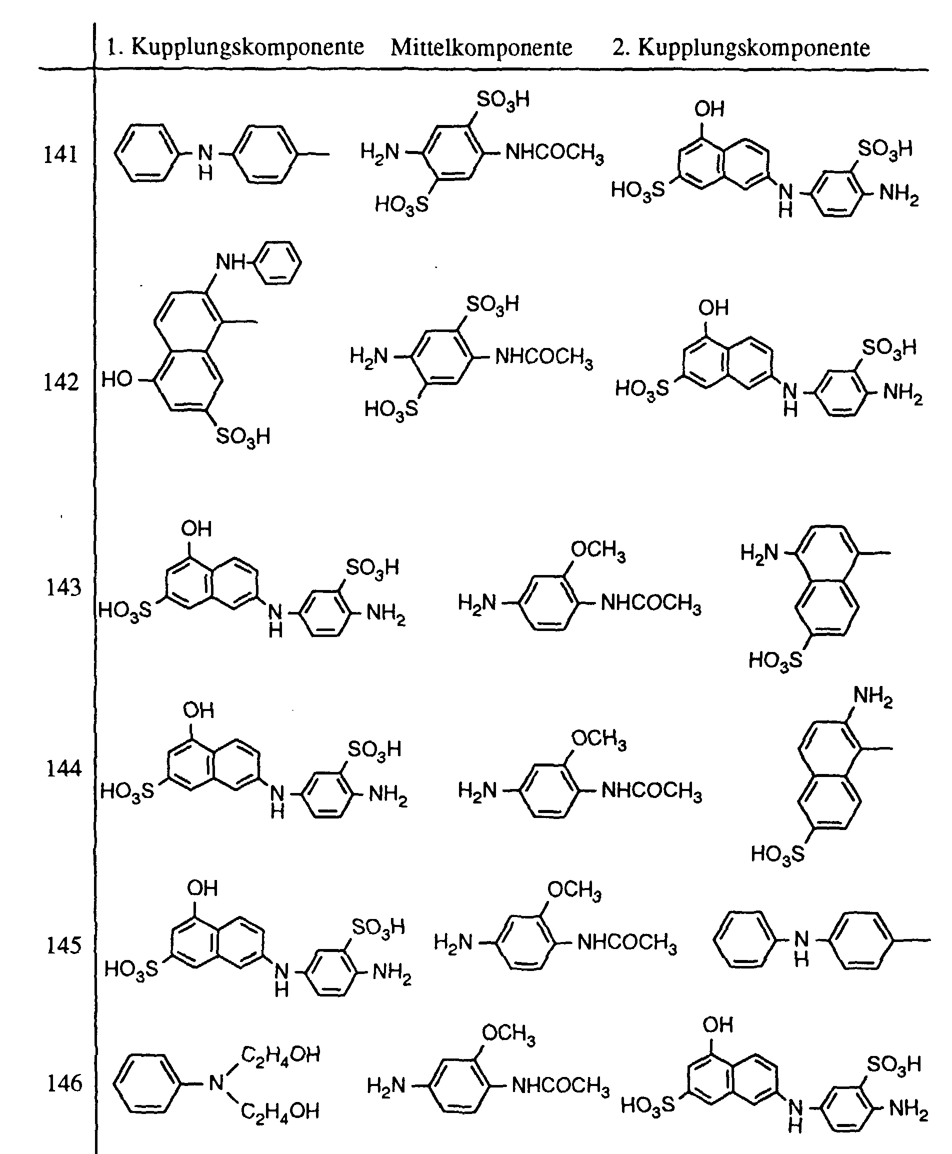

Beispiel 147: 57,7 Teile Nitroazofarbstoff, hergestellt durch Kupplung von 2-(4'-Amino-3'-sulfo-anilino)-5-hydroxy-naphthalin-7-sulfonsäure mit 2-Methoxy-4-nitroanilin werden in 400 Teilen Wasser bei 40° gelöst und mit 32 Teilen Natriumhydroxid versetzt. Bei 55° wird innert 1 Stunde die Lösung von 10 Teilen Glucose in 50 Teilen Wasser zugetropft. Wenn kein Edukt mehr nachweisbar ist, wird mit 70 Teilen Salzsäure (32 %ig) neutralisiert, mit Natriumchlorid ausgesalzen und bei Raumtemperatur filtriert. Der Farbstoff entspricht der Formel 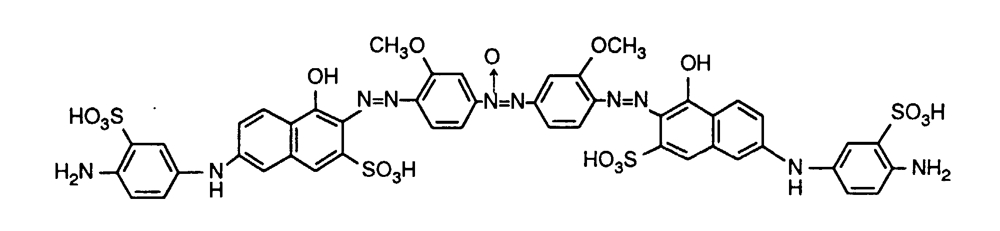 und färbt Papier, Baumwolle und Leder in rotstichig blauen Tönen mit guter Lichtechtheit.

Beispiele 148 bis 151: Verwendet man statt der im Beispiel 147 eingesetzten Nitroverbindung äquimolare Mengen 2,5-Dimethoxy-4-nitroanilin, 2-Methyl-4-nitroanilin, 2,5-Dimethyl-4-nitroanilin oder 4-Nitroanilin, so erhält man violette bis rotstichig blaue Farbstoffe, welche Papier, Baumwolle und Leder mit guter Lichtechtheit färben.

Beispiel 152: Man bereitet eine Lösung der Kupplungskomponente, indem man 90 Teile 2-(4'-Amino-3'-sulfoanilino)-5-hydroxy-naphthalin-7-sulfonsäure in Form des Natriumsalzes bei einem pH-Wert von 7-8 in 500 Teilen Wasser löst. Dann werden 22,6 Teile 4,4'-Diamino-2-methyl-azobenzol in 250 Teilen Wasser und 55 Teilen Salzsäure (32 %ig) durch Zugabe von 52 Vol-Teilen 4N Natriumnitritlösung bei einer Temperatur von 0-5° diazotiert und zur vorstehend beschriebenen Lösung der Kupplungskomponente getropft. Der pH-Wert wird zwischen 8 und 9, die Temperatur bei 0-5° gehalten. Der Farbstoff wird durch Zugabe von Natriumchlorid ausgesalzt und isoliert. Es färbt Papier, Baumwolle und Leder in rotstichig blauen Tönen von guter Lichtechtheit und besitzt in Form der freien Säure die Formel

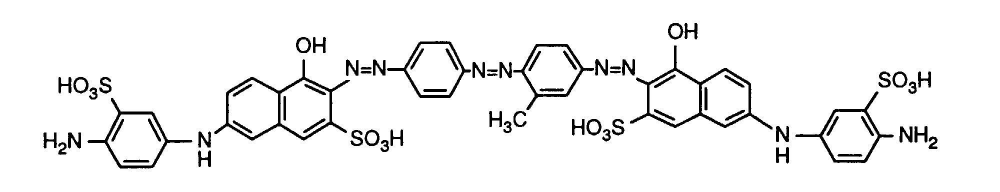

Beispiele 153 bis 159: Verwendet man statt der im Beispiel 152 angegebenen Tetrazokomponente äquimolare Mengen 4,4'-Diaminostilben, 4,4'-Diamino-2-methoxyazobenzol, 4,4'-Diamino-3-methoxy-azobenzol, 4,4'-Diamino-diphenylamin, 4,4'-Diaminobenzanilid, 4,4'-Diamino-diphenylharnstoff oder ein Diamin folgender Struktur 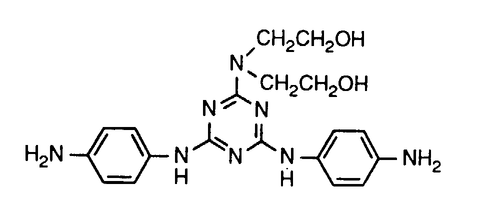 so erhält man ebenfalls Farbstoffe, welche Papier in violetten bis rotstichig blauen Tönen von guter Lichtechtheit färben.

Beispiel 160: 200 Teile des Farbstoffes aus Beispiel 1 werden in Form der freien salzarmen Farbstoffsäure in 500 Teilen Wasser homogen verrührt und durch Zugabe von 75 Teilen Diethanolamin und 100 Teilen Harnstoff bei 40° gelöst. Die Lösung wird unter Zusatz eines Filterhilfsmittels klärfiltriert. Das Filtrat lässt man auf Raumtemperatur abkühlen und stellt es mit Wasser auf 1000 Teile ein. Man erhält eine stabile Farbstofflösung, welche eine flüssige Handelsform darstellt.

Anstelle von Diethanolamin können auch Monoethanolamin, Triethanolamin, 2-(2-Aminoethoxy)-ethanol, Polyglykolamine, wie sie in der DE-A-2.061.760 beschrieben sind, Ammoniak, Tetramethylammoniumhydroxid, Lithiumhydroxid oder Lithiumcarbonat eingesetzt werden.

Flüssige Handelsformen weiterer Farbstoffe können in der im Beispiel 160 beschriebenen Weise erhalten werden, wenn man anstelle des im Beispiel 1 beschriebenen Farbstoffs einen der Farbstoffe der Beispiele 2 bis 159 verwendet.

Beispiel 161: In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 160 beschriebenen Farbstofflösung. Nach 20 Minuten Mischzeit wird aus dieser Masse Papier hergestellt. Das auf diese Weise erhaltene saugfähige Papier ist blau gefärbt. Das Abwasser ist praktisch farblos.

Beispiel 162: 0,5 Teile des Farbstoffpulvers aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine blaue Nuance mit guten Nassechtheiten.

Beispiel 163: 97 g des gemäss Beispiel 1 erhaltenen Farbstoff-Na-Salzes werden in 600 ml Wasser angerührt und bei 50° mit 160 ml Nitrobenzol, 81,4 g Tributylamin und 44 ml HCl 32 % versetzt. Man verrührt bei 70°, bis der Farbstoff vollständig in die organische Phase übergegangen ist. Die wässrige Phase wird verworfen und die organische Phase wird zweimal mit je 600 ml heissem Wasser gewaschen. Dann werden 300 ml Wasser und 80,0 g Triethanolamin zugegeben und das Gemisch bei 85° verrührt, bis der Farbstoff vollständig in die wässrige Phase übergegangen ist. Die wässrige Phase wird durch Wasserdampfdestillation von Spuren Nitrobenzol und Tributylamin befreit. Man erhält eine stabile Farbstofflösung. Die organische Phase wird für weitere Extraktionen eingesetzt.

## Patentansprüche

1. Verfahren zum Färben von Papier, dadurch gekennzeichnet, dass man einen Farbstoff der Formel 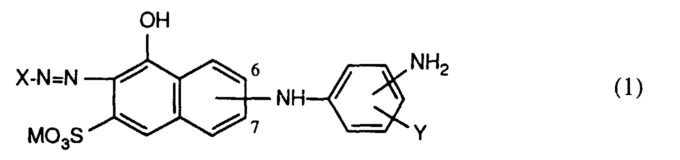 verwendet, worin
Y Sulfo oder Carboxy und
X eine Gruppe der Formel 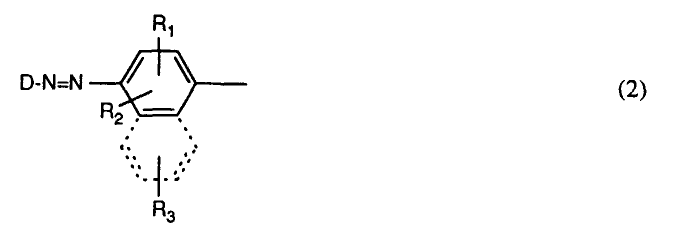
oder
KK-N=N-B- (3)
bedeutet, wobei
D eine aromatische, carbocyclische oder heterocyclische Diazokomponente,
KK eine Kupplungskomponente,
B den Rest eines aromatischen Diamins,
R₁ Wasserstoff, C₁-C₄-Alkyl oder -Alkoxy, -NH-CO-C₁-C₄-Alkyl oder -NH-CO-NH₂
R₂ Wasserstoff, C₁-C₄-Alkyl oder -Alkoxy, Sulfo oder Carboxy,
R₃ Wasserstoff, C₁-C₄-Alkyl, Sulfo oder Carboxy und
M Wasserstoff oder ein Aequivalent eines farblosen Kations bedeutet, wobei Y und die freie Aminogruppe am Phenylaminorest in der Formel (1) o-ständig zueinander stehen, wobei der Phenylaminorest in 6- oder 7-Stellung gebunden ist und wobei D nicht der Rest von 4-Nitro-4'-aminostilben-2,2'-disulfonsäure oder
4,4'-Diaminostilben-2,2'-disulfonsäure ist.

2. Verfahren gemäss Anspruch 1, dadurch gekennzeichnet, dass man einen Farbstoff der Formel (1) verwendet, worin Y Sulfo bedeutet und die freie Aminogruppe in p-Stellung zur -NH-Gruppe steht.

3. Verfahren gemäss einem der Ansprüche 1 oder 2, dadurch gekennzeichnet, dass man einen Farbstoff der Formel (1) verwendet, worin D einen Phenylrest darstellt, der unsubstituiert oder durch Sulfo, Carboxy, Chlor, Cyan, Hydroxy, Nitro, C₁-C₄-Alkyl oder -Alkoxy, Phenylamino, Phenylsulfonyl, Phenylazo, Phenylcarbonylamino oder Styryl substituiert ist oder einen Naphthylrest, der unsubstituiert oder durch Sulfo, Hydroxy oder Phenylazo substituiert ist, wobei die Phenylgruppen in den Substituenten unsubstituiert oder durch Sulfo substituiert sind.

4. Verfahren gemäss einem der Ansprüche 1 bis 3, dadurch gekennzeichnet, dass man einen Farbstoff der Formel (1) verwendet, worin X eine Gruppe der Formel 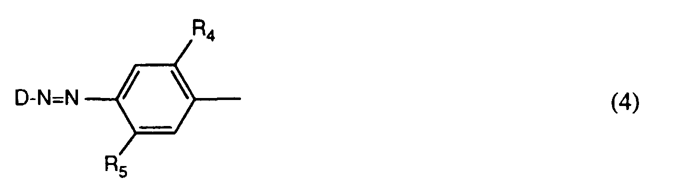 oder 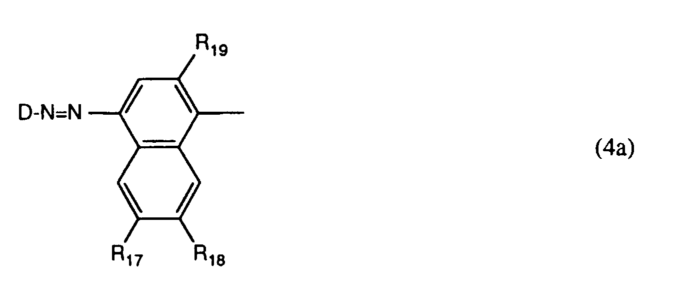 bedeutet,
worin D einen Phenylrest darstellt, der durch Sulfo, Carboxy, Chlor, Cyan, Hydroxy, Nitro, C₁-C₄-Alkyl oder -Alkoxy, Phenylamino, Phenylsulfonyl, Phenylazo, Phenylcarbonylamino oder Styryl substituiert ist, oder einen Naphthylrest, der durch Sulfo, Hydroxy oder Phenylazo substituiert ist, wobei die Phenylgruppen in den Substituenten unsubstituiert oder durch Sulfo substituiert sind,
R₄ Wasserstoff, Methyl oder Methoxy,
R₅ Wasserstoff, Methyl, Methoxy oder Acetylamino,
R₁₇ und R₁₈ unabhängig voneinander je Wasserstoff oder Sulfo und
R₁₉ Wasserstoff, Methoxy oder Carboxymethoxy bedeutet.

5. Verfahren gemäss einem der Ansprüche 1 bis 3 dadurch gekennzeichnet, dass man einen Farbstoff der Formel (1) verwendet, worin X eine Gruppe der Formel
KK-N=N-B- (3)
ist, worin KK eine Kupplungskomponente der Formel 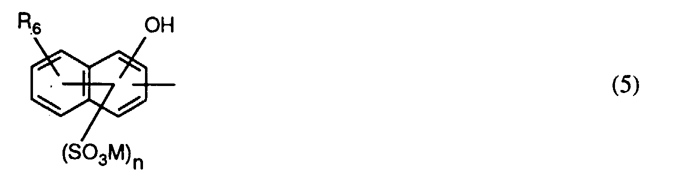 oder 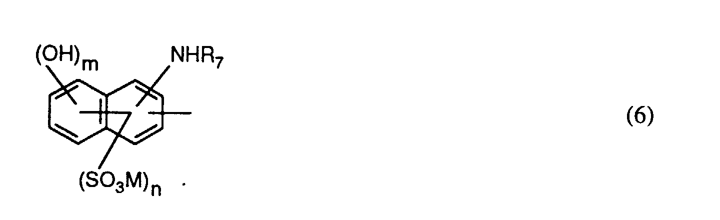 ist, worin
R₆ Wasserstoff, Hydroxy, Alkoxy, Amino, Alkanoylamino, Phenylcarbonylamino oder Phenylamino bedeutet, wobei die Phenylgruppen durch Sulfo, Amino oder Alkanoylamino substituiert sein können,
n 1 oder 2,
R₇ Wasserstoff, oder Phenylamino,
M Wasserstoff oder ein Aequivalent eines farblosen Kations und
m 0 oder 1 und
B den Rest eines Phenylendiamins der Formel 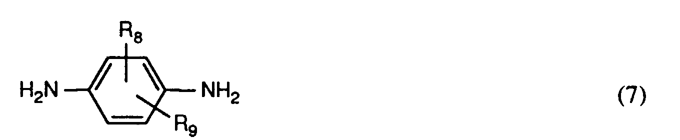
oder eines Diamins der Formel 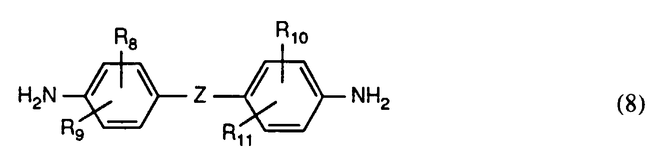 darstellt, worin R₈, R₉, R₁₀ und R₁₁ unabhängig voneinander je Wasserstoff, C₁-C₄-Alkyl oder -Alkoxy, Sulfo oder Carboxy und Z ein Brückenglied der Formel -N=N-, 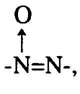 -CH=CH-, -NH-, -CO-NH-, -NH-CO-NH- oder 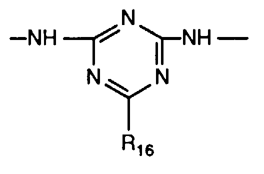 ist, worin R₁₆ 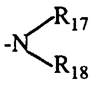 und R₁₇ und R₁₈ unabhängig voneinander je gegebenenfalls substituiertes C₁-C₄-Alkyl bedeuten.

6. Verfahren gemäss Anspruch 5, dadurch gekennzeichnet, dass man einen Farbstoff verwendet, worin Z-CH=CH- oder 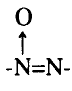 bedeutet.

7. Verfahren gemäss einem der Ansprüche 1 bis 6, dadurch gekennzeichnet, dass man einen Farbstoff der Formel (1) verwendet, worin M Na^{⊕}, Li^{⊕} oder protoniertes C₄-C₆-Alkanolamin bedeutet.

8. Verfahren gemäss Anspruch 1, dadurch gekennzeichnet, dass man einen Farbstoff der Formel 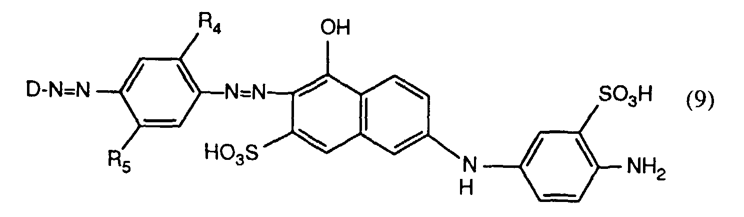 verwendet, worin D einen Phenylrest darstellt, der durch Sulfo, Carboxy, Chlor, Cyan, Hydroxy, Nitro, C₁-C₄-Alkyl oder -Alkoxy, Phenylamino, Phenylsulfonyl, Phenylazo, Phenylcarbonylamino oder Styryl substituiert ist, oder einen Naphthylrest, der durch Sulfo, Hydroxy oder Phenylazo substituiert ist, wobei die Phenylgruppen in den Substituenten unsubstituiert oder durch Sulfo substituiert sind,
R₄ Wasserstoff, Methyl oder Methoxy und
R₅ Wasserstoff, Methyl, Methoxy oder Acetylamino bedeutet.

9. Verfahren gemäss Anspruch 1, dadurch gekennzeichnet, dass man einen Farbstoff der Formel 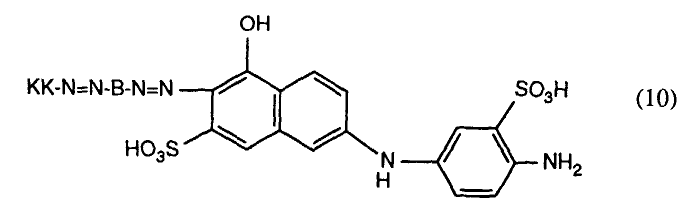 verwendet, worin
KK eine Kupplungskomponente der Formel 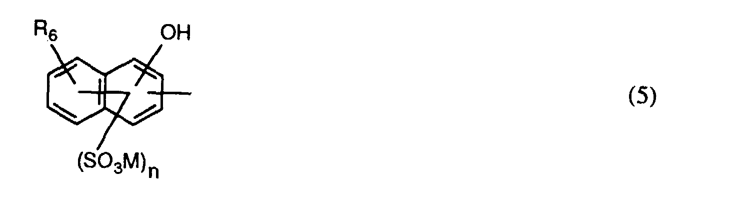 oder 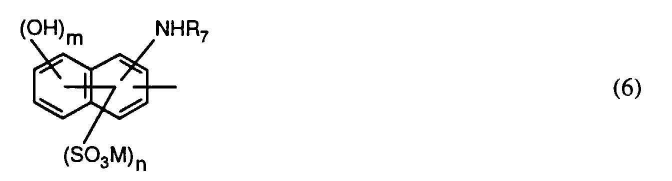 ist, wobei
R₆ Wasserstoff, Hydroxy, Alkoxy, Amino, Alkanoylamino, Phenylcarbonylamino oder Phenylamino bedeutet, wobei die Phenylgruppen durch Sulfo, Amino oder Alkanoylamino substituiert sein können,
n 1 oder 2,
R₇ Wasserstoff, oder Phenylamino,
M Wasserstoff oder ein Aequivalent eines farblosen Kations und
m 0 oder1 und
B den Rest eines Phenylendiamins der Formel 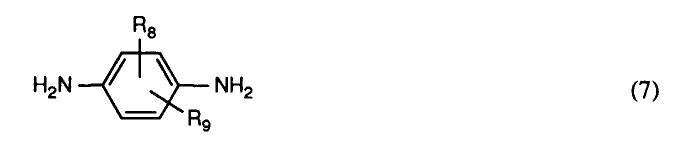
oder eines Diamins der Formel 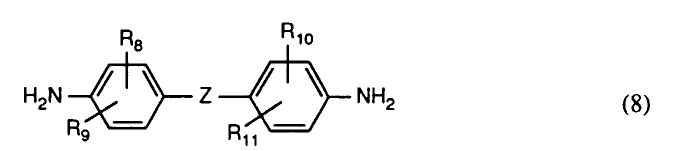 darstellt, worin R₈, R₉, R₁₀ und R₁₁ unabhängig voneinander je Wasserstoff, C₁-C₄-Alkyl oder -Alkoxy, Sulfo oder Carboxy und Z ein Brückenglied der Formel -N=N-, 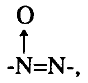 -CH=CH-, -NH-, -CO-NH-, -NH-CO-NH- oder 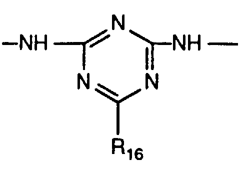 ist, worin R₁₆ 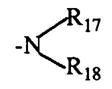 und R₁₇ und R₁₈ unabhängig voneinander je gegebenenfalls substituiertes C₁-C₄-Alkyl bedeuten.

10. Verwendung von konzentrierten wässrigen Farbstofflösungen, die 10 bis 30, vorzugsweise 20 bis 30, Gewichtsprozent Farbstoff der Formel (1), bezogen auf das Gesamtgewicht der Lösung, enthalten, zum Färben von Papier.

11. Verwendung gemäss Anspruch 10, dadurch gekennzeichnet, dass der Farbstoff in Form eines Lithium- oder Alkanolaminsalzes, insbesondere eines Diethanolamin- oder Triethanolaminsalzes, vorliegt.

12. Das nach den Verfahren gemäss den Ansprüchen 1 bis 9 gefärbte Papier.

## Claims

1. A process for dyeing paper, which comprises the use of a dye of formula 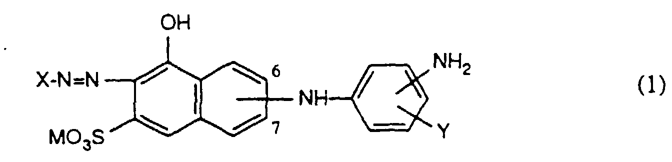 wherein
Y is sulfo or carboxy, and
X is a group of formula 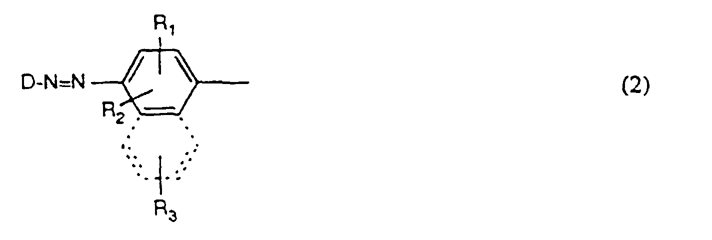
or
KK-N=N-B- (3)
wherein
D is an aromatic,carbocyclic or heterocyclic diazo component,
KK is a coupling component,
B is the radical of an aromatic diamine,
R₁ is hydrogen, C₁-C₄alkyl or C₁-C₄alkoxy, -NH-CO-C₁-C₄alkyl or -NH-CO-NH₂,
R₂ is hydrogen, C₁-C₄alkyl or C₁-C₄alkoxy, sulfo or carboxy,
R₃ is hydrogen, C₁-C₄alkyl, sulfo or carboxy, and
M is hydrogen or one equivalent of a colourless cation, and Y and the free amino group on the phenylamino radical in formula (1) are in ortho-position to each other, and the phenylamino radical is attached in 6- or 7-position, and with the proviso that D is not the radical of 4-nitro-4'-aminostilbene-2,2'-disulfonic acid or 4,4'-diaminostilbene-2,2'-disulfonic acid.

2. A process according to claim 1, which comprises the use of a dye of formula (1) wherein Y is sulfo and the free amino group is in para-position to the -NH- group.

3. A process according to one of claims 1 or 2, which comprises the use of a dye of formula (1) wherein D is an unsubstituted phenyl radical or a phenyl radical which is substituted by sulfo, carboxy, chloro, cyano, hydroxy, nitro, C₁-C₄alkyl or C₁-C₄alkoxy, phenylamino, phenylsulfonyl, phenylazo, phenylcarbonylamino or styryl, or is an unsubstituted naphthyl radical or a naphthyl radical which is substituted by sulfo, hydroxy or phenylazo, the phenyl groups of which substituents are unsubstituted or substituted by sulfo.

4. A process according to one of claims 1 to 3, which comprises the use of a dye of formula (1) wherein X is a group of formula 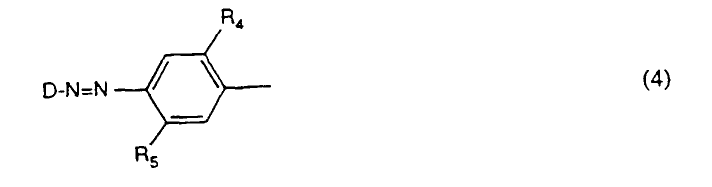 or 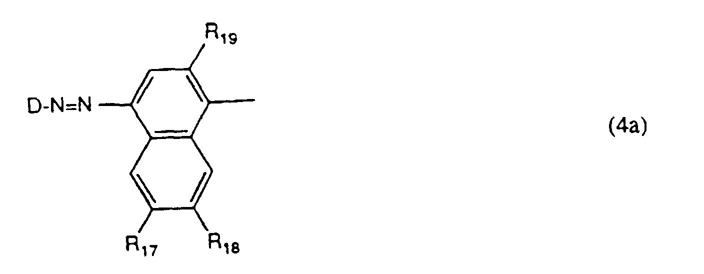 wherein D is a phenyl radical which is substituted by sulfo, carboxy, chloro, cyano, hydroxy, nitro, C₁-C₄alkyl or C₁-C₄alkoxy, phenylamino, phenylsulfonyl, phenylazo, phenylcarbonylamino or styryl, or is a naphthyl radical which is substituted by sulfo, hydroxy or phenylazo, the phenyl groups of which substituents are unsubstituted or substituted by sulfo,
R⁴ is hydrogen, methyl or methoxy,
R₅ is hydrogen, methyl, methoxy or acetylamino,
R₁₇ and R₁₈ are each independently of the other hydrogen or sulfo and
R₁₉ is hydrogen, methoxy or carboxymethoxy.

5. A process according to one of claims 1 to 3, which comprises the use of a dye of formula (1) wherein X is a group of formula
KK-N=N-B- (3)
wherein KK is a coupling component of formula 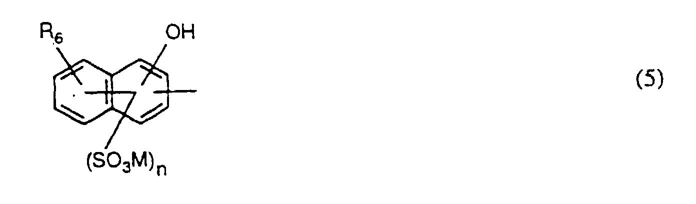 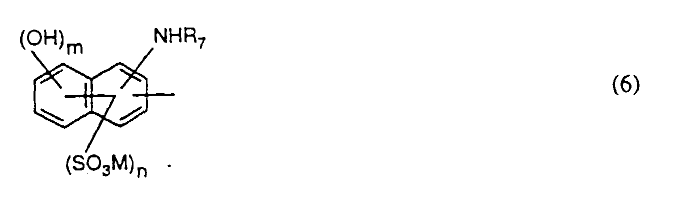 wherein
R₆ is hydrogen, hydroxy, alkoxy, amino, alkanoylamino, phenylcarbonylamino or phenylamino, where the phenyl groups may be substituted by sulfo, amino or alkanoylamino,
n is 1 or 2,
R₇ is hydrogen or phenylamino,
M is hydrogen or one equivalent of a colourless cation, and m is 0 or 1, and
B is the radical of a phenylenediamine of formula 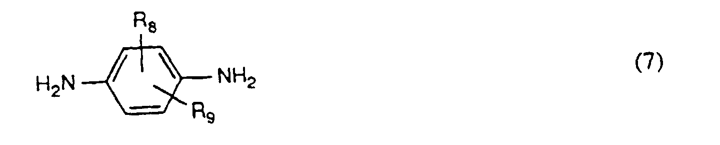
or a diamine of formula 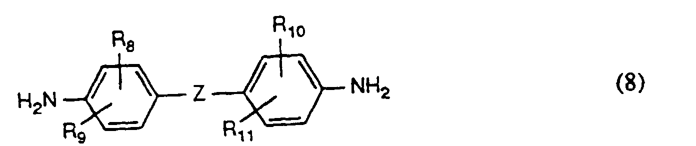 wherein R₈, R₉, R₁₀ and R₁₁ are each independently of one another hydrogen, C₁-C₄alkyl or C₁-C₄alkoxy, sulfo or carboxy and Z is a linking group of formula
-N=N-, 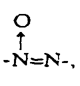 -CH=CH-. -NH-, -CO-NH-, -NH-CO-NH- or 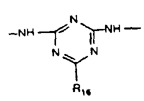 wherein R₁₆ is 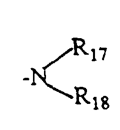 and R₁₇ and R₁₈ are each independently of the other unsubstituted or substituted C₁-C₄alkyl.

6. A process according to claim 5, which comprises the use of a dye wherein Z is
Z-CH=CH- or

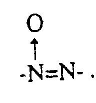

7. A process according to one of claims 1 to 6, which comprises the use of a dye of formula (1) wherein M is Na®, Li® or protonated C₄-C₆alkanolamine.

8. A process according to claim 1, which comprises the use of a dye of formula 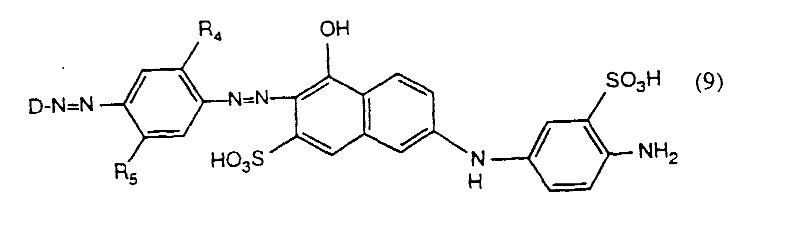 wherein D is a phenyl radical which is substituted by sulfo, carboxy, chloro, cyano, hydroxy, nitro, C₁-C₄alkyl or C₁-C₄alkoxy, phenylamino, phenylsulfonyl, phenylazo, phenylcarbonylamino or styryl, or is a naphthyl radical which is substituted by sulfo, hydroxy or phenylazo, the phenyl groups of which substituents are unsubstituted or substituted by sulfo,
R₄ is hydrogen, methyl or methoxy, and
R₅ is hydrogen, methyl, methoxy or acetylamino.

9. A process according to claim 1, which comprises the use of a dye of formula 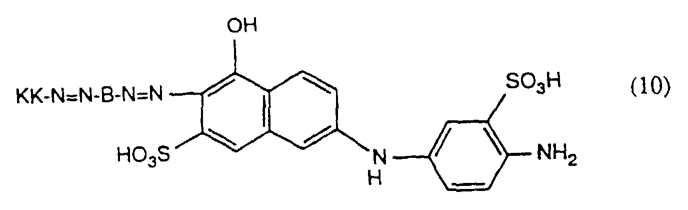 wherein
KK is a coupling component of formula 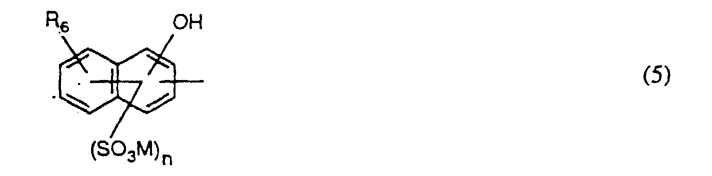 or 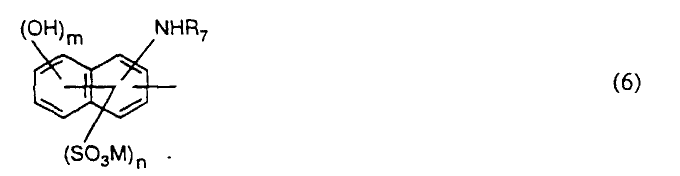 wherein
R₆ is hydrogen, hydroxy, alkoxy, amino, alkanoylamino, phenylcarbonylamino, or phenylamino, where the phenyl groups may be substituted by sulfo, amino or alkanoylamino,
n is 1 or 2,
R₇ is hydrogen, or phenylamino,
M is hydrogen or one equivalent of a colourless cation, and
m is 0 or 1, and
B is the radical of a phenylenediamine of formula 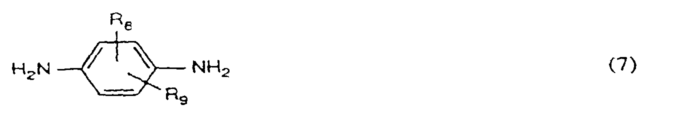
or of a diamine of formula 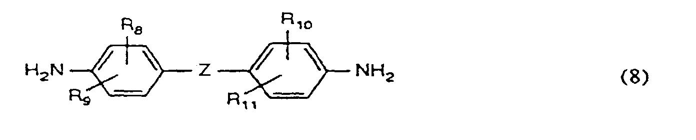 wherein R₈, R₉, R₁₀ and R₁₁ are each independently of one another hydrogen, C₁-C₄alkyl or C₁-C₄alkoxy, sulfo or carboxy and Z is a linking group of formula
-N=N-, 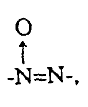 -CH=CH-, -NH-, -CO-NH -NH-CO-NH- or 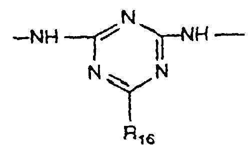 wherein R₁₆ is 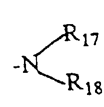 and R₁₇ and R₁₈ are each independently of the other unsubstituted or substituted C₁-C₄alkyl.

10. The use of concentrated aqueous dye solutions which contain 10 to 30, preferably 20 to 30, per cent by weight of dye of formula (1), based on the total weight of the said solution, for dyeing paper.

11. The use according to claim 10, wherein the dye is in the form of a lithium or alkanolamine salt, especially a diethanolamine or triethanolamine salt.

12. Paper dyed by a process according to claims 1 to 9.

## Revendications

1. Procédé de teinture du papier, caractérisé en ce que l'on utilise un colorant de formule 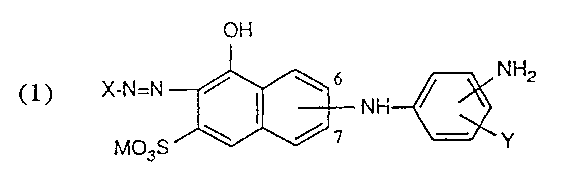 dans laquelle
Y représente un groupe sulfo ou carboxy, et
X représente un groupe de formule 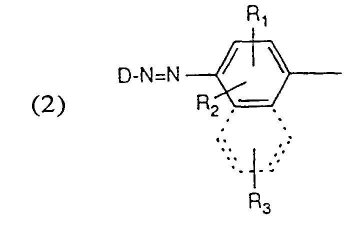
ou
(3) KK-N=N-B-
dans lesquelles
D représente le résidu d'un composant diazo aromatique, carbocyclique ou hétérocyclique,
KK représente un copulant,
B représente le résidu d'une diamine aromatique,
R₁ représente un atome d'hydrogène, un groupe alkyle ou alcoxy en C₁₋₄, -NH-CO-(alkyle en C₁₋₄) ou -NH-CO-NH₂,
R₂ représente un atome d'hydrogène, un groupe alkyle ou alcoxy en C₁₋₄, sulfo ou carboxy,
R₃ représente un atome d'hydrogène ou un groupe alkyle en C₁₋₄, sulfo ou carboxy, et
M représente un atome d'hydrogène ou un équivalent d'un cation incolore,
Y et la fonction amine libre du résidu phénylamino dans la formule (1) étant en position *ortho* l'un par rapport à l'autre, le résidu phénylamino étant lié par la position 6 ou 7 et D n'étant pas un résidu d'acide 4-nitro-4'-stilbène-2,2'-disulfonique ou 4,4'-diaminostilbène-2,2'-disulfonique.

2. Procédé conforme à la revendication 1, caractérisé en ce que l'on utilise un colorant de formule (1) dans lequel Y représente un groupe sulfo et la fonction amine libre est un position para par rapport au groupe -NH.

3. Procédé conforme à l'une des revendications 1 ou 2, caractérisé en ce que l'on utilise un colorant de formule (1) dans lequel D représente un résidu phényle non substitué ou portant un ou plusieurs substituants sulfo, carboxy, cyano, hydroxy, nitro, alkyle ou alcoxy en C₁₋₄, phénylamino, phénylsulfonyle, phénylazo, phénylcarbonylamino ou styryle, ou un résidu naphtyle non substitué ou portant un ou plusieurs substituants sulfo, hydroxy ou phénylazo, les groupes phényle dans les substituants pouvant être non substitués ou sulfonés.

4. Procédé conforme à une des revendications 1 à 3 caractérisé en ce que l'on utilise un colorant de formule (1) dans laquelle X représente un groupe de formule 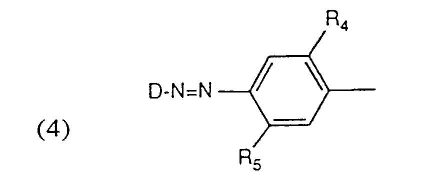 ou 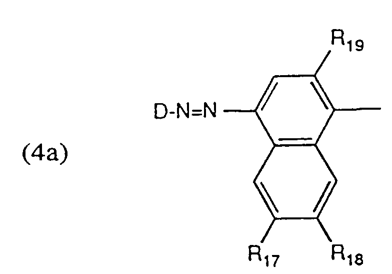 dans lesquelles
D représente un résidu phényle portant un ou plusieurs groupes sulfo, carboxy, chloro, cyano, hydroxy, nitro, alkyle ou alcoxy en C₁₋₄, phénylamino, phénylsulfonyle, phénylazo, phénylcarbonylamino ou styryle, ou un résidu naphtyle portant un ou plusieurs groupes sulfo, hydroxy ou phénylazo, les groupes phényle des substituants pouvant être non substitués ou porter, à leur tour, un groupe sulfo,
R₄ représente un atome d'hydrogène ou un groupe méthyle ou méthoxy,
R₅ représente un atome d'hydrogène ou un groupe méthyle, méthoxy ou acétylamino,
R₁₇ et R₁₈ représentent, indépendamment l'un de l'autre, chacun un atome d'hydrogène ou un groupe sulfo, et
R₁₉ représente un atome d'hydrogène ou un groupe méthoxy ou carboxyméthoxy.

5. Procédé conforme à une des revendications 1 à 3, caractérisé en ce que l'on utilise un colorant de formule (1) dans lequel X représente un groupe de formule
(3) KK-N=N-B-
où KK représente un copulant de formule 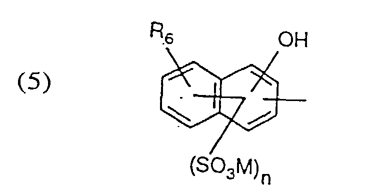 ou 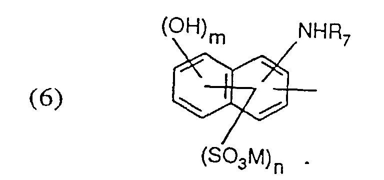 dans lesquelles
R₆ représente un atome d'hydrogène, un groupe hydroxy, alcoxy, amino, alcanoylamino, phénylcarbonylamino ou phénylamino, les groupes phényle pouvant être substitués par des résidus sulfo, amino ou alcanoylamino,
n vaut 1 ou 2,
R₇ représente un atome d'hydrogène ou un groupe phénylamino,
M représente un atome d'hydrogène ou un équivalent d'un cation incolore et
m vaut 0 ou 1, et
B représente le résidu d'une phénylènediamine de formule 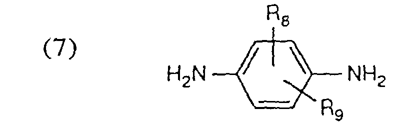
ou d'une diamine de formule 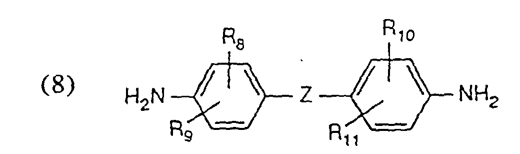 où R₈, R₉, R₁₀ et R₁₁ représentent, indépendamment l'un de l'autre, chacun un atome d'hydrogène, un groupe alkyle ou alcoxy en C₁₋₄, sulfo ou carboxy, et Z représente un élément pontant de formule -N=N-, 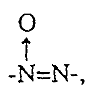 -CH=CH-, -NH- -CO-NH-, -NH-CO-NH- 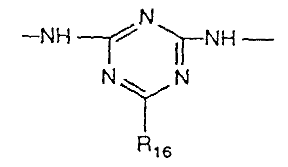 où R₁₆ représente un groupe 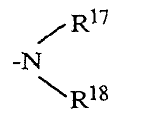 et R₁₇ et R₁₈ représentent, indépendemment l'un de l'autre, chacun un groupe alkyle en C₁₋₄ éventuellement substitué.

6. Procédé conforme à la revendication 5, caractérisé en ce que l'on utilise un colorant dans lequel Z représente un groupe -CH=CH ou

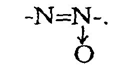

7. Procédé conforme à une des revendications 1 à 6, caractérisé en ce que l'on utilise un colorant de formule (1) dans lequel M représente un ion sodium ou lithium ou une alcanolamine en C₄₋₆ protonée.

8. Procédé conforme à la revendication 1, caractérisé en ce que l'on utilise un colorant de formule 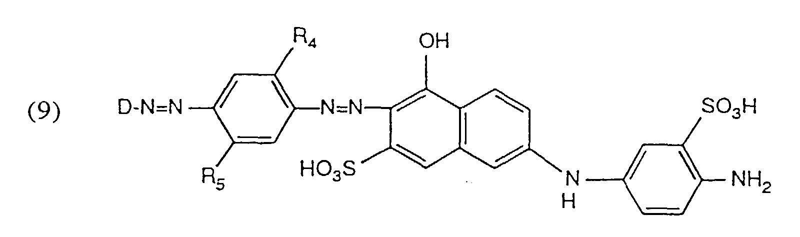 dans laquelle
D représente un noyau phényle substitué par un groupe sulfo, carboxy, chloro, cyano, hydroxy, nitro, alkyle en C₁₋₄ ou alcoxy en C₁₋₄, phénylamino, phénylsulfonyle, phénylazo, phénylcarbonylamino ou styryle ou un résidu naphtyle portant des substituants sulfo, hydroxy ou phénylazo, les groupes phényle de ces substituants pouvant être non substitués ou sulfonés, et
R₄ représente un atome d'hydrogène ou un groupe méthyle ou méthoxy, et
R₅ représente un atome d'hydrogène ou un groupe méthyle, méthoxy ou acétylamino.

9. Procédé conforme à la revendication 1, caractérisé en ce que l'on utilise un colorant de formule 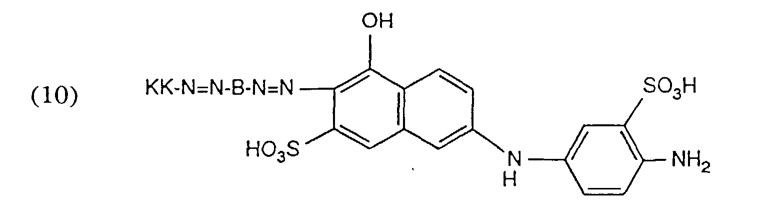 dans laquelle
KK représente un copulant de formule 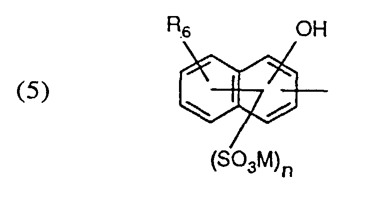 ou 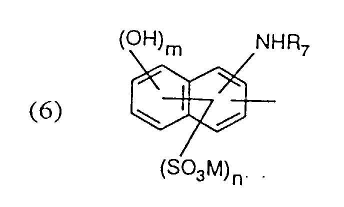 où
R₆ représente un atome d'hydrogène, un groupe hydroxy, alcoxy, amino, alcanoylamino, phénylcarbonylamino ou phénylamino, les groupes phényle pouvant porter des substituants sulfo, amino ou alcanoylamino,
n vaut 1 ou 2,
R₇ représente un atome d'hydrogène ou un résidu phénylamino,
M représente un atome d'hydrogène ou un équivalent d'un cation incolore,
m vaut 0 ou 1, et
B représente le résidu d'une phénylènediamine de formule 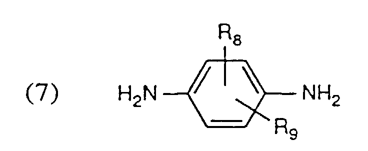
ou d'une diamine de formule 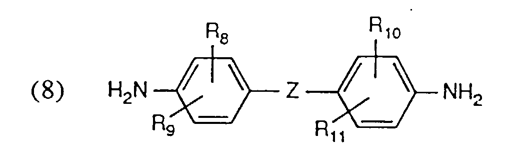 dans lesquelles R₈, R₉, R₁₀ et R₁₁ représentent, indépendemment l'un de l'autre, chacun un atome d'hydrogène, un groupe alkyle en C₁₋₄, alcoxy en C₁₋₄, sulfo ou carboxy et Z représente un élément pontant de formule -N=N-, 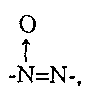 -CH=CH-, -NH-, -CO-NH-, -NH-CO-NH- 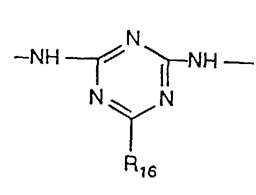 où R₁₆ représente un résidu 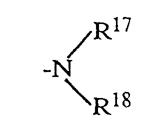 et R₁₇ et R₁₈ représentent, indépendamment l'un de l'autre, chacun un groupe alkyle en C₁₋₄ éventuellement substitué.

10. Utilisation de solutions aqueuses concentrées de colorant contenant de 10 à 30 % en poids, de préférence de 20 à 30 % en poids de colorant de formule (1) rapporté au poids total de la solution, pour la teinture du papier.

11. Utilisation conforme à la revendication 10, caractérisé en ce que le colorant est sous forme d'un sel de lithium ou d'alcanolamine, en particulier sous forme de sel de diéthanolamine ou de triéthanolamine.

12. Papier teint selon les procédés conformes aux revendications 1 à 9.
